# EUROPEAN PATENT APPLICATION

(11) **EP 4 035 742 A1**
(43) Date of publication of application: **03.08.2022**
(21) Application number: 20858905.1
(22) Date of filing: 31.08.2020
(51) Int. Cl.: A62B 35/00, F16B 45/02

(54) **CONNECTOR FOR SAFETY DEVICE CONNECTION**

(30) Priority: 30.08.2019 JP 2019159159; 21.10.2019 JP 2019192333
(71) Applicant: Aida, Co., Ltd., Tokyo 123-0871 (JP)
(72) Inventor: GOTO, Takaaki, Tokyo 123-0871 (JP)
(74) Representative: Becker, Eberhard
(86) International application number: PCT/JP2020/032963
(87) International publication number: WO 2021/040051

(57) **Abstract**

Unintentional disconnection of the connected state by a connector for safety device connection is prevented. A connector for safety device connection of an embodiment comprises a frame that is formed in an open curve shape so that the ends face each other, and has an opening for inserting a connection portion of the safety device; and a gate that is provided to close the opening and is configured to be supported on one end of the frame, to close the opening when in contact with the other end, and to open the opening when the contact with the other end is released. The frame has a spine on the opposite side of the opening, and of the frame portions continuous with the end portions of the spine, the first portion continuous with the end portion of the frame on the gate support side is formed with a small curvature to hang a line-shaped or strip-shaped body. The second portion of the frame portions that is located on the opposite side of the first portion and is continuous with the end portion of the spine on the opening side is formed with a large curvature so as to suppress the movement of a shaft member.

## Description

The present invention relates to a connector for safety device connection.

### BACKGROUND ART

A connector for safety device connection is a connecting member that is partially openable and closable and is configured to hang other members. An example of this type of connector is a carabiner. Carabiners are widely used as a connection for lifelines used in high-altitude work. Carabiners are also used as climbing equipment, such as a climbing rope, and slinging equipment for cargo handling work.

As described above, connector for safety device connections can be used for various purposes. As such, connectors have specific configurations that are designed to serve specific purposes.

For example, a connector typically comprises a c-shaped frame with an opening. To one end of this frame, a proximal end of a gate is attached. With this attached point as a pivot, the gate rotates. This structure enables the connector to selectively open and close to form a complete loop.

It should be noted that some devices should be easily attached to and detached from the connector while others should not.

In the above-mentioned mechanism that changing the point of the nose of the gate makes the connector to be open and closed, the gate typically has an elastic body, which is biased toward closing the connector. Thus, in order to open the gate, one needs to rotate the gate against this urging force.

Patent Document 1 below discloses a connector comprising a guidance part. As used herein, the term "guidance part" is intended to encompass an extended part of a gate that is bent toward the inside of the frame. In other words, this gate, compared to the conventional gate, is extended by a predetermined length. The user can open the gate by hooking a part of a product to be connected to the gate against the extension part of the tip of the gate. This means that the user can open the gate with one action. This connector prioritizes ease of opening over keeping the gate closed.

### PRIOR ART DOCUMENTS

### PATENT DOCUMENTS

Patent Document 1: Japanese Unexamined Patent Application Publication No. 1998-220456

### SUMMARY OF THE INVENTION

### PROBLEMS TO BE SOLVED BY THE INVENTION

Connector for safety device connections need to prevent the connection state from being unintentionally released. It may not be enough to simply provide a lock mechanism for the rotation of the gate. There are occasions in which a connector connects lifeline and physical holder. Examples of these occasions include connecting lanyard and a full harness, connecting a rescue rope and rescue harness, and connecting climbing rope and climbing harness. Sudden, unintended disconnection of these connections may lead to an accident.

Due to the movement of the wearer and various other causes, the connection part on the lifeline side and the connection part on the body holder side are relatively displaced. Connectors require tensile strength that does not break because there are occasions in which a connector is pulled toward the lifeline side on the one hand and toward the physical holder side on the other side. The tensile strength and durability of connectors, due to their structures, differ depending on the tensile direction. Therefore, if a tensile load is applied in a direction that makes it difficult to secure the strength of the connector, the connector itself could be damaged.

The connecting part on a lifeline side or the connecting part on a body holder side can be a flat fiber member or a webbing sling. In that case, each end in the width direction of the connecting part may be frayed or torn due to friction or the like. In other words, even if a connector itself is not damaged, the side to be connected by the connector (such as a webbing sling) may be damaged. This damage may break the connection between a lifeline and a physical holder.

The present invention has been made in view of the above problems, and an object of the present invention is to prevent a situation in which a connection state by a connector for safety device connection is unintentionally released.

### MEANS OF SOLVING THE PROBLEMS

A connector for safety device connection according to the present invention includes the followings:
a frame that is formed in an open curve to make the ends of the frame face each other and that has an opening for inserting the connecting portion of another connector for safety device connection from between the one end and the other end;
a gate that is supported by one end of the frame, closes the opening when it is in contact with the other end, and opens the opening when the contact with the other end is released.

The frame has a spine on the opposite side of the opening. Of the parts of the frame that is continuous with the spine, the first portion that is continuous with the end of the frame on the gate support side is formed with a small curvature so that a straight line or a webbing sling can be hung.

Of the parts of the frame, the second portion, located on the opposite side of the first portion and continuous with the opening-side end of the spine, is formed with a large curvature so as to suppress the movement of an annular member made of a shaft member.

In addition, the connector for safety device connection according to the present invention may further include a protrusion part that partially narrows the area between the opening side and the spine side opposite to the opening by, at least, protruding inside the frame. The protrusion part is provided on the lower side of the spine when the one end side of the frame is downward and the other end side of the frame is upward so as to be formed integrally with the frame.

Further, in the connector for safety device connection according to the present invention, the gate may be configured in a way that when the gate is rotatably supported at one end of the frame and rotated around one end from the closed state, the contact with the other end is released and the open state is established.

Further, in the connector for safety device connection according to the present invention, the protrusion part may be configured so as to protrude not only inside the frame but also in the side surface direction.

Furthermore, in the protrusion part, among the inclined surface connecting the inwardly protruding end and the base end of the protruding portion, the downward tilt angle may be 50 degrees or more.

Furthermore, in the protrusion part, among the inclined surface connecting the inwardly protruding end and the base end of the protruding portion, the upward tilt angle may be 40 degrees or less.

Furthermore, the extension direction of the gate, when the gate rotates and is farthest from one end of the frame, may be configured to be inclined by 10 degrees or more, with respect to the first direction corresponding to the direction of the spine of the frame as well as to the second direction connecting one end and the other end.

The connector for safety device connection of the other embodiment includes the followings:
a frame that is formed in an open curve so that the ends face each other and has an opening that allows a connecting portion of a safety device to be inserted between the ends;
a gate that is provided to close the opening, supported at one end of the frame, closes the opening when in contact with the other end, and opens the opening when the contact with the other end is released.

The frame has a spine on the opposite side of the opening. Of each frame part that is continuous with each end of the spine, the frame has a first continuous portion at the end of the frame on the gate support side. Further, the frame has a second portion connecting the side opposite to the first portion side of the spine and the nose, which is the portion where the gate tip portion abuts.

When the gate rotates and its tip is farthest from the one end of the frame, with the first direction from the spine to the gate side and the second direction connecting one end and the other end viewed on the same plane, the extension direction of the gate is inclined by 10 degree or more with respect to the plane.

The first part of the frame may be formed with a small curvature so that a straight line or a webbing sling can be hung and is located on the opposite side of the first part of each frame part. The second part of the frame may be formed with a large curvature so as to suppress the movement of the annular member made of the shaft member.

In addition, the connector for safety device connection may further include a protrusion part that partially narrows the area between the opening side and the spine side opposite to the opening by, at least, protruding inside the frame. The protrusion part is provided on the lower side of the spine or the one end side of the frame when the one end side is downward and the other end side of the frame is upward so as to be formed integrally with the frame.

### EFFECTS OF THE INVENTION

According to the embodiments of the present invention, On the lower side corresponding to the gate support side of the frame, a small curvature is formed so that a linear or band shape body can be hung. Further, on the opposite side, a large curvature is formed so as to suppress the movement of the annular member made of the shaft member. This configuration suppresses the movement of the annular member hung on the upper side while preventing the strip-shaped body from deteriorating due to friction or the like on the lower side. Therefore, this configuration can prevent a tensile load from being applied in a direction in which the connector is easily damaged. As a result, situations where the connection state by the connector for safety device connection is unintentionally released can be prevented.

### BRIEF DESCRIPTION OF THE DRAWINGS

[FIG. 1] FIG. 1 is a schematic front view illustrating a connector for safety device connection according to a first embodiment.
[FIG. 2] FIG. 2 is a schematic rear view illustrating the connector for safety device connection according to the first embodiment.
[FIG. 3] FIG. 3 is a schematic right side view illustrating the connector for safety device connection according to the first embodiment.
[FIG. 4] FIG. 4 is a schematic left side view illustrating the connector for safety device connection according to the first embodiment.
[FIG. 5] FIG. 5 is a schematic top view illustrating the connector for safety device connection according to the first embodiment.
[FIG. 6] FIG. 6 is a schematic bottom view illustrating the connector for safety device connection according to the first embodiment.
[FIG. 7] FIG. 7 is a schematic perspective view illustrating an example of the connector for safety device connection according to the first embodiment.
[FIG. 8] FIG. 8 is a schematic front view illustrating an open state and a closed state of the connector for safety device connection, respectively, according to the first embodiment.
[FIG. 9] FIG. 9 is a schematic rear view illustrating the open state and the closed state of the connector for safety device connection, respectively, according to the first embodiment.
[FIG. 10] FIG. 10 is a schematic view illustrating a state in which the connector for safety device connection is being used according to the first embodiment.
[FIG. 11] FIG. 11 is a schematic front view illustrating a modification example of the connector for safety device connection according to the first embodiment.
[FIG. 12] FIG. 12 is a schematic rear view illustrating a modification example of the connector for safety device connection according to the first embodiment.
[FIG. 13] FIG. 13 is a schematic perspective view illustrating a modification example of the example of the connector for safety device connection according to the first embodiment.
[FIG. 14] FIG. 14 is a schematic front view illustrating a modification example of the open state and the closed state of the connector for safety device connection, respectively, according to the first embodiment.
[FIG. 15A] FIG. 15 is a schematic rear view illustrating a modification example of the open state and the closed state of the connector for safety device connection, respectively, according to the first embodiment.
[FIG. 15B] FIG. 15B is a schematic view illustrating a modification example the state in which the connector for safety device connection is being used according to the first embodiment.
[FIG. 16] FIG. 16 is a schematic front view illustrating a connector for safety device connection according to a second embodiment.
[FIG. 17] FIG. 17 is a schematic rear view illustrating the connector for safety device connection according to the second embodiment.
[FIG. 18] FIG. 18 is a schematic right side view illustrating the connector for safety device connection according to the second embodiment.
[FIG. 19] FIG. 19 is a schematic left side view illustrating the connector for safety device connection according to the second embodiment.
[FIG. 20] FIG. 29 is a schematic top view illustrating the connector for safety device connection according to the second embodiment.
[FIG. 21] FIG. 21 is a schematic bottom view illustrating the connector for safety device connection according to the second embodiment.
[FIG. 22] FIG. 7 is a schematic perspective view illustrating an engagement state of the connector for safety device connection according to the second embodiment.
[FIG. 23] FIG. 23 is a schematic front view illustrating an open state and a closed state of the connector for safety device connection, respectively, according to the second embodiment.
[FIG. 24] FIG. 24 is a schematic rear view illustrating the open state and the closed state of the connector for safety device connection, respectively, according to the second embodiment.
[FIG. 25] FIG. 25 is a schematic right side view illustrating the open state and the closed state of the connector for safety device connection, respectively, according to the second embodiment.
[FIG. 26] FIG. 26 is a schematic left side view illustrating the open state and the closed state of the connector for safety device connection, respectively, according to the second embodiment.
[FIG. 27] FIG. 27 is a top view illustrating the open state and the closed state of the connector for safety device connection, respectively, according to the second embodiment.
[FIG. 28] FIG. 28 is a bottom view illustrating the open state and the closed state of the connector for safety device connection, respectively, according to the second embodiment.
[FIG. 29] FIG. 29 is a perspective view illustrating the open state and the closed state of the connector for safety device connection, respectively, according to the second embodiment.
[FIG. 30] FIG. 30 is a schematic perspective view illustrating an example of a connector for safety device connection according to a third embodiment.
[FIG. 31] FIG. 31 is a schematic front view illustrating a connector for safety device connection according to a fourth embodiment.
[FIG. 32] FIG. 32 is a schematic rear view illustrating the connector for safety device connection according to the fourth embodiment.
[FIG. 33] FIG. 33 is a schematic right side view illustrating the connector for safety device connection according to the fourth embodiment.
[FIG. 34] FIG. 34 is a schematic left side view illustrating the connector for safety device connection according to the fourth embodiment.
[FIG. 35] FIG. 35 is a schematic top view illustrating the connector for safety device connection according to the fourth embodiment.
[FIG. 36] FIG. 36 is a schematic bottom view illustrating the connector for safety device connection according to the fourth embodiment.
[FIG. 37] FIG. 37 is a schematic perspective view illustrating a connector for safety device connection according to a fifth embodiment.
[FIG. 38] FIG. 38 is a schematic front view illustrating the connector for safety device connection according to the fifth embodiment.
[FIG. 39] FIG. 39 is a schematic rear view illustrating the connector for safety device connection according to the fifth embodiment.
[FIG. 40] FIG. 40 is a schematic right side view illustrating the connector for safety device connection according to the fifth embodiment.
[FIG. 41] FIG. 41 is a schematic left side view illustrating the connector for safety device connection according to the fifth embodiment.
[FIG. 42] FIG. 42 is a schematic top view illustrating the connector for safety device connection according to the fifth embodiment.
[FIG. 43] FIG. 43 is a schematic bottom view illustrating the connector for safety device connection according to the fifth embodiment.
[FIG. 44] FIG. 44 is a schematic front view illustrating an open state and a closed state of the connector for safety device connection, respectively, according to the fifth embodiment.
[FIG. 45] FIG. 45 is a perspective view illustrating the open state and the closed state of the connector for safety device connection, respectively, according to the fifth embodiment.

### DESCRIPTION OF THE EMBODIMENTS

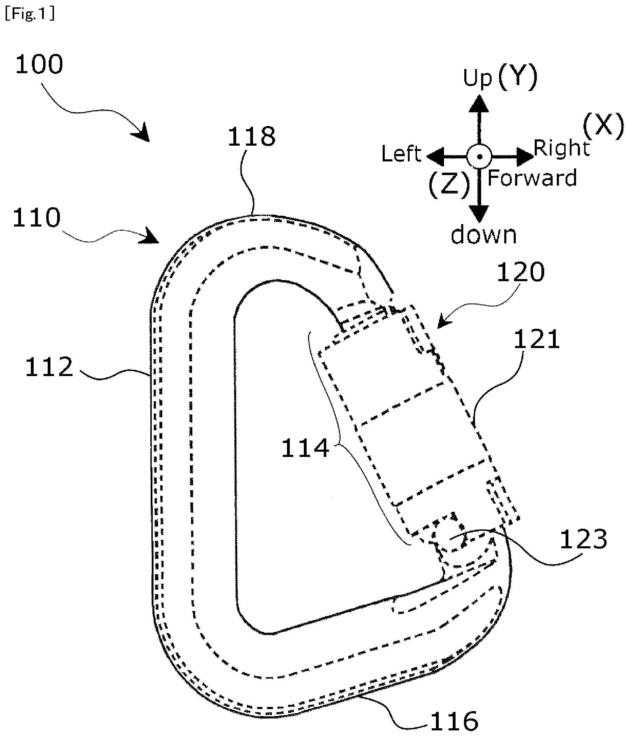

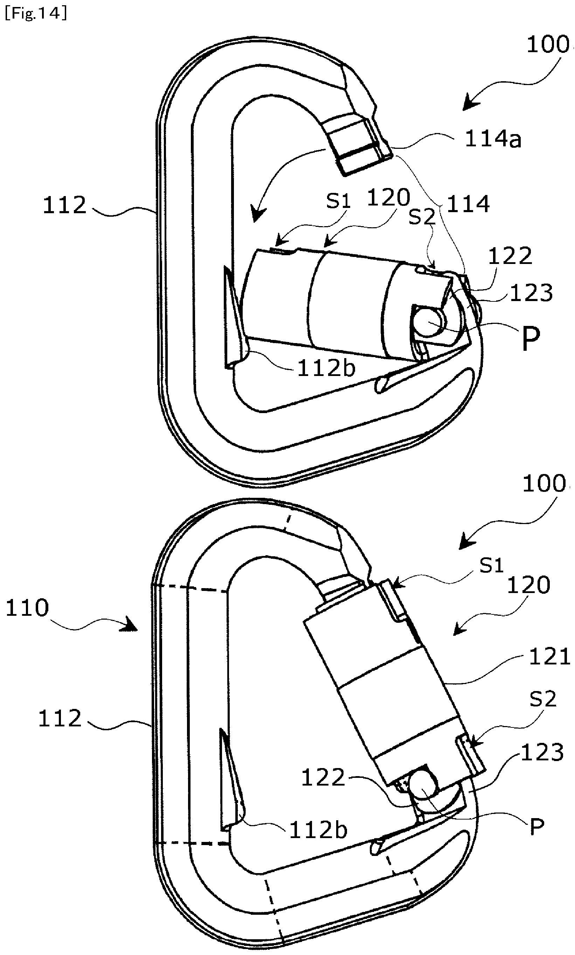

With referring to FIG. 1 to FIG. 15, the connector for safety device connection according to the first to fifth embodiments will be described.

### [First embodiment]

Overall configuration of the connector for safety device connection 100 according to the first embodiment will be described with reference to FIG. 1 to FIG. 10. In FIG. 1 to FIG 7, the outline of the front surface, the back surface, the right side surface, the left side surface, the top surface, the bottom surface and the perspective of the connector for safety device connection 100 according to the first embodiment is shown.

On the frame (body part) of the connector for safety device connection, a gap is formed for inserting a flat rope (belt-shaped member) and the like. This gap will be referred to as an "opening" below. Further, the side of the frame opposite to the opening will be referred to as a "spine". The opening side and the spine side of the frame face each other inward of the frame, but the opposite directions are defined as a left-right direction for convenience of explanation. In line with this, the direction orthogonal to this left-right direction and passing between the spine and the opening is defined as an up-down direction.

Further, the front surface of the connector for safety device connection 100 may be described as "front", and the surface opposite to the front may be described as "rear". It should be noted that each of these directions is set for convenience of explanation of the embodiment and that it does not attempt to specify the usage state or the like of the connector for safety device connection 100. The top and bottom, front and back, left and right, front and back can be changed as appropriate depending on the state at the time of use.

Further, as an embodiment of the connector for safety device connection 100 of the present embodiment, a carabiner can be an example. Further, a gate is a component of the connector for safety device connection for switching between a closed state in which the tip end side is in contact with one end of an opening of the frame and an open state in which the gate is separated from the one end.

### [The outlines of overall configuration]

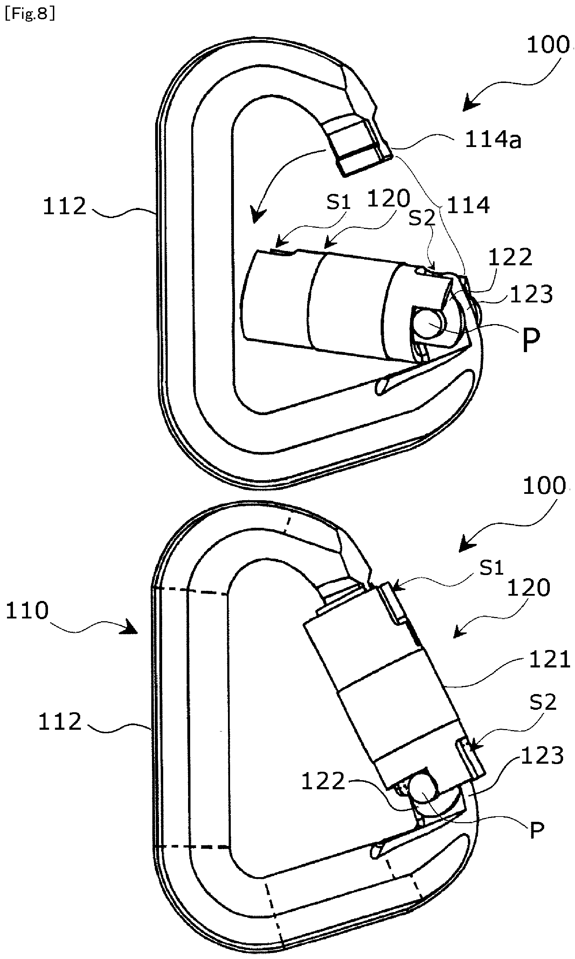

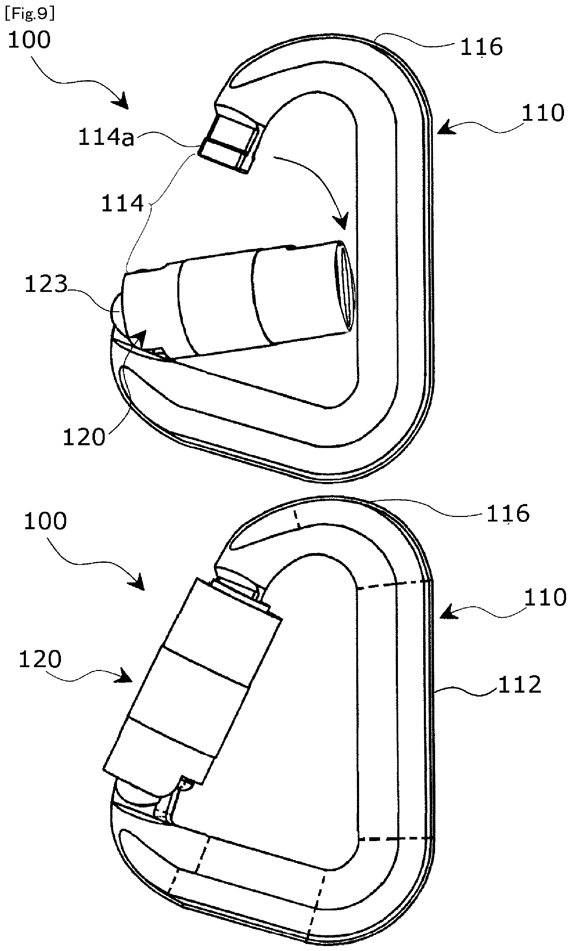

As shown in FIG. 1 to FIG. 7, the connector for safety device connection 100 includes the frame 110 and the gate 120. The frame 110 is formed by forming shaft-shaped members (or rod-shaped members, columnar members, or the like) so that their ends do not come into contact with each other, that is, in an open curved shape. Further, the end portion of the shaft-shaped member constituting the frame 110 is formed so as to face and the above-mentioned opening of the frame. In other words, the frame 110 is formed by forming each end of the shaft-shaped member so as to sandwich the opening. The state of "facing the opening" can be paraphrased as a C-shape in another expression. The gate 120 is provided at the distance sandwiched between one end side and the other end side of the shaft-shaped member (see FIG 8 and FIG9, the opening 140). The connector for safety device connection 100 is defined (separated) from the inside and the outside of the entire connector for safety device connection 100 by closing the gap in the frame 110 by the gate 120. The connector for safety device connection 100 shown in FIG. 1 has a convex shape as a whole. However, the configuration of the connector for safety device connection 100 is not limited to this. A concave portion, for example, can be included.

### [The frame 110]

Specific examples of the shape of the connector for safety device connection are shown in FIG. 1 to FIG. 9. It should be noted that the shape in which the spine is curved is also included in the present embodiment. The present embodiment also includes a linear portion above the frame (the second portion 118 described later). The connector for safety device connection 100 of FIG. 1 to FIG. 9 is an example of the embodiment of the present invention, but the shape thereof is particular to the present embodiment. The connector for safety device connection 100 is composed of one side consisting of the spine 112, one side consisting of the first portion 116, and one side formed by combining each end of the frame 110 and the gate 120, and has a shape similar to a triangle with curved corners. Although each of these sides is linear in each figure, it may be curved as long as the curvature is low.

In the frame 110 in FIG. 1, the width of the end side supporting the gate 120, that is, the lower side, is wider than that of the upper side (the length in the left-right direction is long). In other words, the lower side corresponds to the gate support side when the major axis of the carabiner is viewed in the top to bottom direction. However, it is desirable that the width of the webbing sling does not move too much in the left-right direction with respect to the lower portion, based on the width of the webbing sling that is likely to be hung on the lower portion. The lower side is formed in a straight line or a curved shape with a small curvature.

Further, the frame 110 has an upper side portion including an end side (nose side) that can be closed by coming into contact with the gate 120. The upper portion is formed narrowly so that the width limits the movement of the annular member such as D rings. "Narrow" herein means that the upper portion is shorter in length than the webbing sling width that is likely to be hung on the lower side or the lower portion of the frame. Further, the spine 112 is provided between the lower side (reference numeral 116) and the upper side (118) of the frame 110. The spine 112 is formed in a straight line in the example of each figure.

Further, in the frame 110 in FIG. 1, the lower end side of the spine 112 along the top to bottom direction is curved toward the lower right direction. The lower end of the spine 112 curved in the lower right direction is further curved in the upper right direction. The beyond curve in the upper right direction is the lower part of the frame 110 (the first portion 118 described later). The top to bottom and left-right directions are as follows.

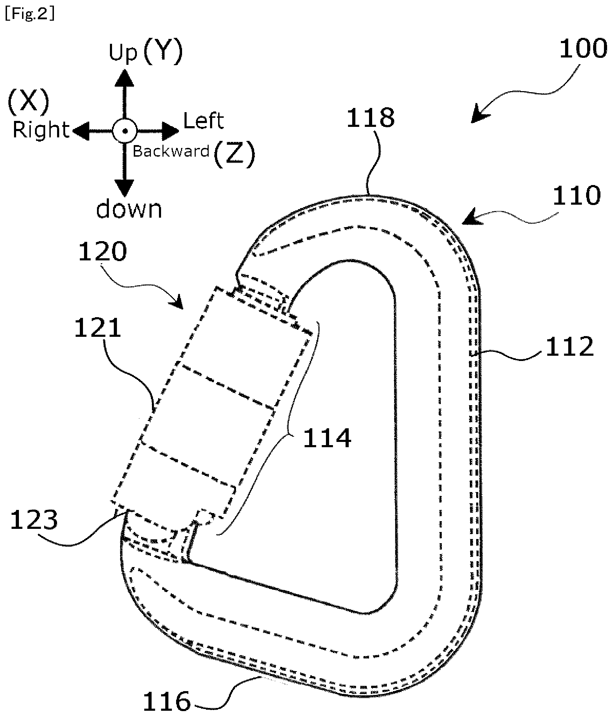

That is, whether the spine 112 is linear or includes a curved portion, a first direction (such as major axis) connecting one end and the other end of the spine 112 can be defined. The top to bottom direction of FIG. 1 is represented along the first direction, and the following description follows the same (such as FIG. 1 to FIG. 3 and FIG. 7). Further, FIG. 1 is a viewpoint in which a second direction that connects one end and the other end that is provided so as to sandwich the opening of the gate 120 (or the frame 110) and the "top to bottom direction" thereof are viewed on approximately the same plane (the line-of-sight direction of FIG. 1 and FIG. 2). The opening is illustrated in the opening 114 in FIG. 8 and FIG. 9. One end is illustrated in the nose 114a in FIG. 8 and FIG. 9. The direction along the plane and orthogonal to the top to bottom direction is defined as the left-right direction.

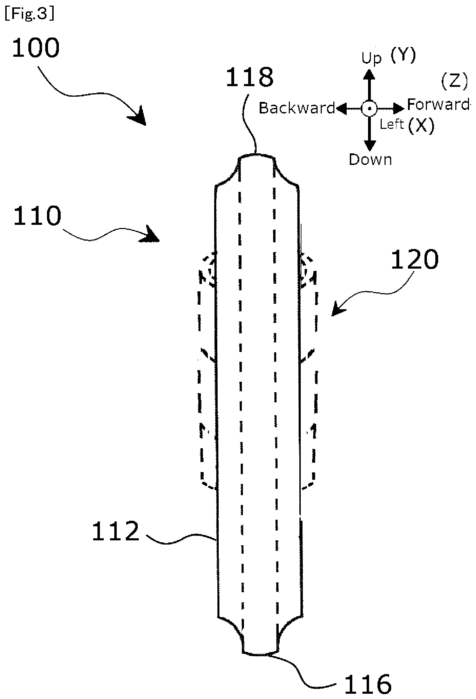

Further, a shape (contour shape) of the cross section orthogonal to the circumferential direction of the frame 110, that is, the axial direction (longitudinal direction and the front-back direction in each drawing) is described. As shown in FIG. 3 to FIG. 7, the outer contour of the frame 110 is inclined downward from the center side toward each end side in the width direction of the cross section of the frame 110. Such a configuration can be obtained, for example, by compressing each end side of the frame 110 in the width direction toward the center side in the width direction. This configuration makes the metal structure denser and enhances resistance to tensile load, impact resistance, and fatigue strength.

### <The first portion 116>

Further, in the above plane, under the situation where one end to the other end of the spine 112 is the top to bottom direction and the direction connecting the spine 112 and the gate 120 is the left-right direction, the first portion 116 is described in that direction. The first portion 116 is a portion curved from the lower end of the spine 112 extending in the top to bottom direction. The first portion 116 is provided so as to extend from the lower end of the spine 112 in the left-right direction.

In the configuration of the frame 110 according to the example in FIG. 1, the first portion 116 goes from the lower end of the spine 112 to the upper right. The inclination angle of the first portion 116 with respect to the spine 112 is approximately 74 ° to 76 ° in FIG. 1 and FIG. 2. However, the inclination angle can be any angle in the range of 50 ° to 130 °. Further, from the viewpoint of the balance between the miniaturization of the frame 110 and the ease of putting in and taking out articles on the connector for safety device connection 100, the inclination angle should preferably be in the range of 60° to 110°.

Further, a length of the first portion 116 can be determined by the length of a contact portion between an article expected to be hung on the connector for safety device connection 100 and the connector for safety device connection 100. The contact portion herein refers to a length (width) of a contactable portion between an article to be used and the first portion 116. In FIG. 1, the first portion 116 has a length corresponding to the width of a webbing sling (commonly known as a flat rope) of a lanyard, which is a fall prevention device, as an example. Here, the "corresponding length" means, for example, the length in the range of the ratio of -20% to + 30% with respect to the band width of the webbing sling.

### <The second portion 118>

The second portion 118 is described based on a configuration of the frame 110 of FIG. 1 with the spine 112 on the left side and the gate 120 on the right side. The second portion 118 is located above the spine 112. Further, the second portion 118 is formed in a curved shape (for example, a substantially arc shape) that is convex outward. In other words, as shown in FIG. 1, the second portion 118 is curved from the upper end of the spine 112 in the upper right direction, and further curved in the lower right direction. It should be noted that the curvature of the curved surface of the arc-shaped second portion 118 is small, a shaft-shaped member such as a D-ring over the connector for safety device connection 100 rattles (the D-ring slips). This can also increase the overall size of the connector for safety device connection 100. Further, the second portion 118 does not have to have the substantially arc shape. Further, the second portion 118 may include a straight portion as long as it is not clearly longer than the diameter of the shaft portion to be connected such as a D ring.

Regarding the safety connector 100, it is formed so that its breaking strength is highest in the axial direction of the spine 112 or in the perpendicular direction (so-called major axis) descending from the second portion 118 to the first portion 116. In other words, generally the durability of a connector for safety device connection such as a carabiner is basically ensured in that direction.

A carabiner used for climbing is used as an example. The carabiner as the connector for safety device connection of this example has a tensile strength or a breaking strength in the top to bottom direction that is 10 times or more higher than that in the left-right direction. Among some carabiners, their tensile strength in the left-right direction is 2 KN while their tensile strength in the top to bottom direction is 25 KN. In other words, in the lateral direction, the durability against a tensile load is low due to the structure of the rotating gate. This difference is caused by the high durability of the spine against the tensile load.

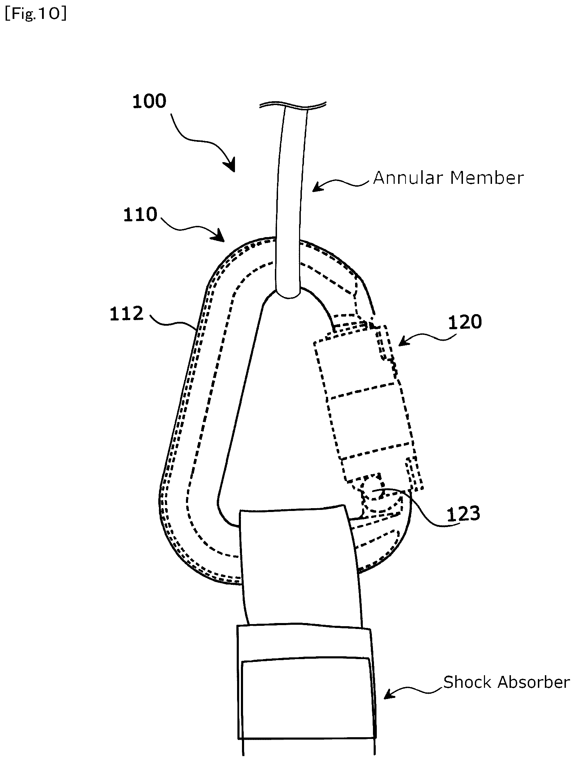

However, a webbing sling such as a flat rope is not always fixed to a part inside the connector depending on the usage condition or the like. In conventional connector for safety device connections, a webbing sling or the like may move to the spine side depending on the usage state. Further, in an example of a carabiner used for a lanyard, it is used on the assumption that the metal ring (for example, a full-harness D ring) is located on the upper side of the carabiner and that a belt-shaped member is located on the lower side (see FIG. 10).

In that state, there will be a user wearing a full harness on the D ring side and a lifeline on the belt-shaped member side (upside down from FIG. 1). If the user crashes under this situation, the metal ring on the full harness side and the belt-shaped member on the lanyard side pull the connector for safety device connection in opposite directions.

In that state, if the pulling direction is along the top to bottom direction of the connector, as shown in FIG. 10, the connector is pulled along the direction in which the strength can be most secured. As such, if the connector has a predetermined breaking strength, the connector will not break (be damaged). On the contrary to this, as described above, a force acts in the direction in which the connector rotates, so that the belt-shaped member tends to move in the direction of the gate or spine. If the belt-shaped member actually shifts, the risk of breakage of the connector for safety device connection increases. This is because the strength of the connector in the left-right direction is generally significantly lower than that in the up-down direction.

According to the present embodiment of the connector for safety device connection 100, the width of the first portion 116 is set corresponding to the width of the strip-shaped member that is likely to be hung on the first portion 116. Further, the shape of the first portion 116 is linear or has a small curvature. Therefore, even if the connector for safety device connection 100 rotates, the connector is unlikely to move in the left-right direction because the degree of adhesion between the first portion 116 and the webbing sling is high, together with friction or the like. Further, even if the webbing sling tries to move to the spine 112 side, it can come into contact with the spine 112 and prevent the movement. Further, since the second portion 118 side is formed in an arc shape, the metal ring of the full harness is also fastened inside the second portion 118. Therefore, even if the metal ring on the full harness side and the belt-shaped member on the lanyard side pull the connector for safety device connection in opposite directions, this acts to prevent the connector for safety device connection 100 from being easily broken.

### <The gate support portion 123>

As described above, the first portion 116 is formed so as to extend to the left and right on the lower end side of the frame 110. In the first portion 116, the end opposite to the end on the spine 112 side is curved toward the second portion 118. The tip curved toward the second portion 118 is interrupted while facing the second portion 118 side. The tip of this interrupted portion is one end of the frame 110, which is referred to as the gate support portion 123. The angle at which the gate support portion 123 is tilted with respect to the spine 112 is about 15 ° to 60 °. An example of this angle is shown in the relevant portion of FIG 1. In the example in this figure, the inclination of the gate support portion 123 with respect to the spine 112 determines the inclination of the gate 120 with respect to the spine 112.

A curved and linear portion of the gate support portion 123 has a boundary with the gate 120, which will be described later. Further, the linear portion of the gate support portion 123 supports the gate 120. As will be described later, the gate 120 can have any other configuration, including a configuration in which the gate 120 rotates inside the connector for safety device connection 100 (spine 112 side). Whatever the configuration is, the gate support portion 123 according to the first embodiment supports the gate 120 on the tip side from the boundary with the first portion 116.

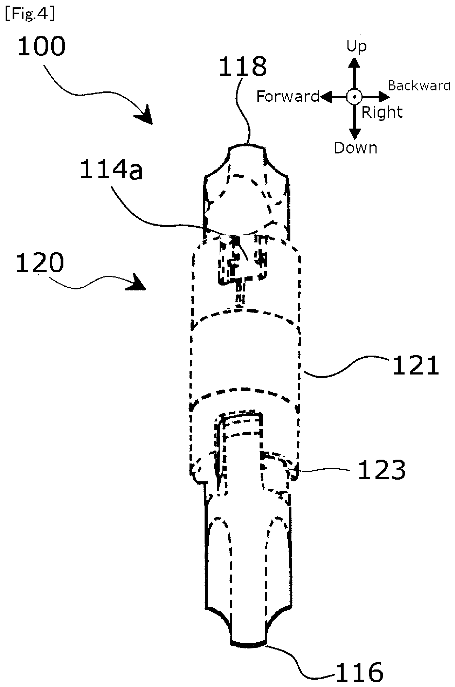

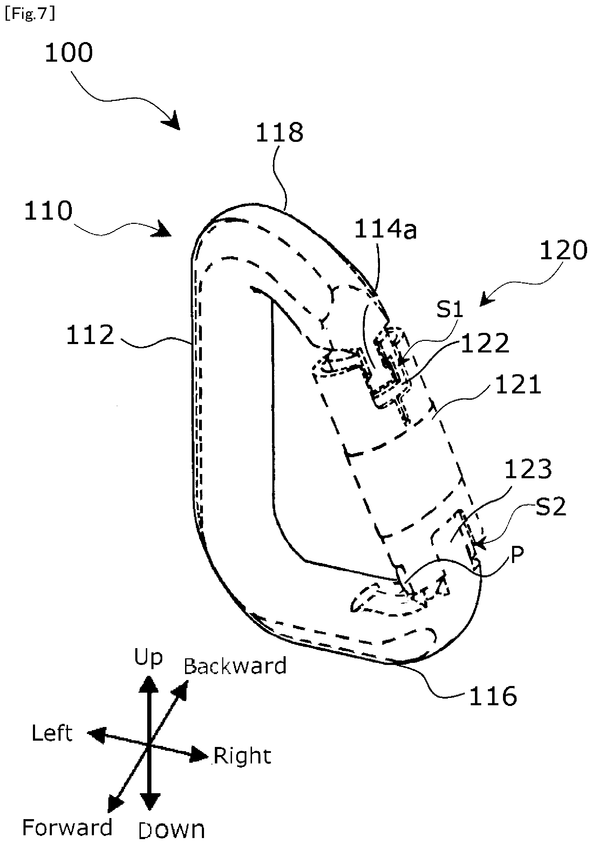

As an example, the gate support portion 123 in a configuration in which the gate 120 rotates inside the connector for safety device connection 100 (spine 112 side) is described. As shown in FIG. 4 and FIG. 7, a linear portion of the gate support portion 123 is formed to be narrower in the front-rear direction with respect to the first portion 116. In this way, the width of the gate support portion 123 is compressed and narrowed to make the metal constituting the frame 110 dense and improve the strength.

### <The nose 114a>

In the second portion 118 formed in an arc shape, the end portion opposite to the spine 112, that is, the tip end side (the other end portion of the frame 110) formed linearly toward the gate support portion 123 is referred to as the nose 114a. The nose 114a is one of the points of contact between the gate 120 and the frame 110. When the nose 114a comes into contact with the end of the gate 120, the connector closes. On the other hand, in the non-contact state, the connector is open.

Further, the nose 114a is formed so as to engage with a concave portion provided in the gate 120. This shape is, for example, a convex shape that matches the concave portion. Further, the nose 114a is formed in a convex shape along the rotation direction of the gate 120.

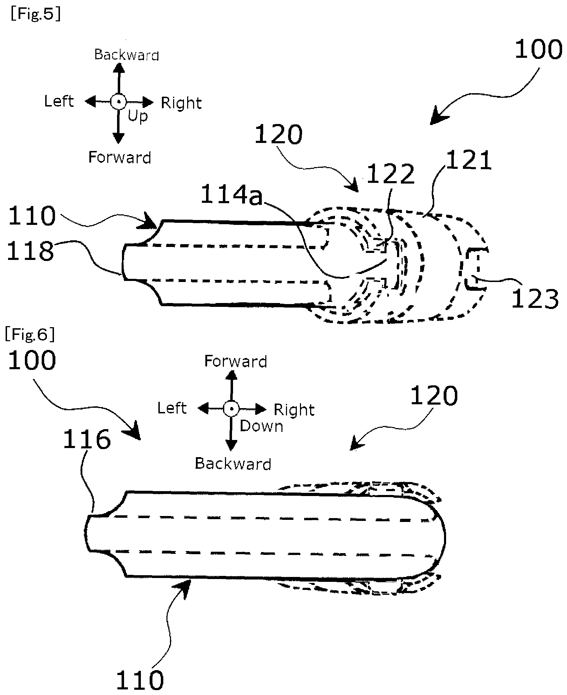

In the example of the connector shown in FIG. 4, FIG. 5, and from FIG. 7 to FIG. 9, the gate 120 is rotatably supported by the gate support portion 123 and is configured to rotate inside the connector for safety device connection 100. In this configuration, the gate 120 rotates inward of the connector for safety device connection 100 to release the contact between the nose 114a and the gate 120. Further, when the gate 120 rotates outward from the non-contact state of both, the nose 114a and the gate 120 come into contact with each other. Although the gate 120 is rotatably supported by the gate support portion 123, it is prevented from rotating outward from the position by contacting and engaging with the nose 114a. In other words, the nose 114a defines the rotation range of the gate 120.

### <The gate 120>

The gate 120 is a part for switching between the open state and the closed state in the connector for safety device connection 100. As shown in FIG. 8 and FIG. 9, the gate 120 is designed in a way that it can reciprocate between the direction in which the tip contacts the nose 114a and the direction in which the tip does not contact the nose 114a while the base end is supported by the gate support portion 123. The gate 120 is biased outward by a biasing member that is not shown. In other words, the concave portion at the tip of the gate 120 is biased toward the nose 114a so as to come into contact with the nose 114a.

In this configuration, as an example, a leaf spring or a coil spring (not shown) is provided inside the gate 120. The spring member is held on the rotation shaft P (FIG. 8) side of the gate support portion 123. Further, the spring member is arranged toward the tip of the gate 120 so as to be substantially along the axial direction of the gate 120. When the gate 120 is pressed against the biasing force of the spring member and rotated toward the spine 112, it bends in that direction. On the other hand, when the force for pressing the gate 120 is released or the pressing force is weaker than the biasing force of the spring member, the biasing force causes the tip of the gate 120 to rotate toward the nose 114a.

The gate 120 shown in FIG. 8 and FIG. 9 has a so-called twist lock (auto lock) mechanism. The gate 120 has the gate body 122, which rotates as described above, and the lock cover 121. The lock cover 121 is provided so as to cover the periphery of the gate body 122 along the axial direction of the gate body 122 that closes the opening 114 (see FIG. 8 and FIG. 9) of the frame 110. The lock cover 121 is rotatably provided around the axis of the gate body 122.

Further, the lock cover 121 is provided with the tip-side slit S1 at a position corresponding to a concave portion in the gate body 122 that receives the nose 114a (see FIG. 7 and FIG. 8). The tip side slit S1 has a length of contacting at least a part of the nose 114a in the axial direction of the gate body 122. The width of the tip side slit S1 is at least wider than the widest width of the nose 114a.

Further, the lock cover 121 is provided with a base end side slit S2 at a position where the gate main body 122 and the gate support portion 123 overlap (see FIG. 7 and FIG. 8). This position is located on the base end side of the gate 120 that descends from the front end side slit S1 to the gate support portion 123 side along the axial direction. The proximal end side slit S2 has a length of contacting at least a part of the outer surface of the gate support portion 123 in the axial direction of the gate main body 122. The width of the base end side slit S2 is at least wider than the widest width of the gate support portion 123.

Further, the lock cover 121 has a concave notch portion at a position separated from the base end side slit S2 by a predetermined interval in the rotation direction of the lock cover 121. This is the portion in contact with the rotation shaft P on the left side of the proximal end side slit S2 in the example of FIG. 8. The length (width) of the notch portion in the rotation direction is formed so as to be slightly wider than the tip side slit S1. The rotation range of the lock cover 121 is determined when each end in the width direction of the notch portion of the lock cover 121 abuts on either one side surface or the other side surface of the rotation shaft P protruding from the gate support portion 123.

When the lock cover 121 rotates and comes to a position where the nose 114a and the tip side slit S1 overlap as shown in FIG 4, the nose 114a becomes exposed by the tip side slit S1. At the same time, the gate support portion 123 becomes exposed by the slit S2 on the proximal end side, and the gate body 122 becomes rotatable. When this happens, one end of the notch portion of the lock cover 121 comes into contact with the rotation shaft P, as shown in FIG. 8. This prevents the lock cover 121 from rotating too much beyond the above exposed state, as shown in FIG 7, making it possible to easily maintain the released state.

Even if the user attempts to rotate the gate body 122 while the lock cover 121 covers the nose 114a and the gate support portion 123, the lock cover 121 comes into contact with the nose 114a and the gate support portion 123. This means that the rotation of the gate 120 is restricted. This is referred to as a "locked state" for convenience of explanation. The width of the notch portion of the lock cover 121 is formed to be slightly wider than the width of the tip side slit S1. This releases the locked state (hereinafter, referred to as the "unlocked state") and reduces the amount of rotation of the lock cover 121 as much as possible. The unlocked state refers to a state in which the nose 114a and the gate support portion 123 are exposed from the slit S1 and the slit S2 of the lock cover 121, respectively.

From this unlocked state, the lock cover 121 rotates and creates a state in which the nose 114a and the gate support portion 123 are covered by the lock cover 121, that is, the locked state. At that time, if it turns too much in the rotation direction (forward), the next time the user switches to the unlocked state, the lock cover 121 needs to be turned a lot. However, as the other end of the notched portion of the lock cover 121 (the other end with respect to the one end) comes into contact with the rotation shaft P, the lock cover 121 becomes prevented from rotating too much. This makes it possible to control the amount of rotation as small as possible to switch to the unlocked state the next time. In other words, the locked state can be easily released, which contributes to the improvement of work efficiency.

Further, the inner peripheral surface side of the lock cover 121 has a biasing member that urges the lock cover 121 in the direction of rotation in the locked state (not shown). Details are as follows. First, a locked state is typically formed through the biasing member. If the lock cover 121 rotates against the biasing force of the biasing member, the released state is obtained. When the force for rotating the lock cover 121 is released or the force is weaker than the biasing force, the lock cover 121 is urged and rotated in a direction covering the nose 114a and the gate support portion 123, respectively. In this way, the lock state is obtained again.

The twist lock mechanism shown such as in FIG. 8 and FIG. 9 is an example of the gate 120, and other configurations can be adopted. The gate 120 may have any configuration as long as the opening 114 of the frame 110 can be switched between a closed state and an open state. For example, the tip of the gate 120 can be designed to slide with respect to one end of the frame 110 corresponding to the nose 114a in the axial direction and come to contact with and detached from one end of the frame 110. In this configuration in which the tip of the gate 120 of this modified example slides, the slide member may rotate in a direction orthogonal to the slide direction, that is, a direction orthogonal to the axial direction of the gate 120 to lock the slide.

### [Operations and effects]

The operations and effects of the connector for safety device connection 100 according to the first embodiment described above is explained below. See FIG. 10.

According to the connector for safety device connection 100 of the embodiment, the first portion 116 connecting the spine 112 and the gate support 123 is formed to be linear or have a small curvature. Thus, a webbing sling, which might be hung here, is unlikely to move in the left-right direction. This makes it possible to prevent deterioration such as fraying and tearing of the end portion of the webbing sling due to the movement of the webbing sling in the left-right direction. The surface on the first portion 116 side has a large inclination angle with respect to the spine 112 and is configured to hold an article to be hung on the first portion 116 side. The second portion 118 is formed in an arc shape or has a larger curvature than the first portion 116. In that case, it is possible to prevent the shaft-shaped member, which is likely to be hung here, from moving in the left-right direction (i.e., rattling).

This configuration can prevent the article to be hung on the connector for safety device connection 100 from moving to a position where the connector for safety device connection 100 is easily damaged depending on the usage state of the connector for safety device connection 100 or the like.

Further, the shape of the first portion 116 increases the degree of adhesion between the webbing sling hung here and the first portion 116. The width of the first portion 116 is set according to the width of the webbing sling to be hung. These suppress the movement of the webbing sling in the left-right direction. As a result, it can prevent fraying, tearing, and the like of the end portion of the webbing sling member in the width direction.

Further, the width of the second portion 118 is set according to the width of the shaft-shaped member to be hung. For example, by forming the shaft-shaped member having the largest diameter (for example, a D ring having a diameter of 13 mm) as wide as 0.5 mm to several mm, the movement of the webbing sling member in the left-right direction is suppressed. This suppresses the movement of the hung shaft-shaped member in the left-right direction. As a result, the movement of the shaft-shaped member that applies tensile strength in a minor axis can be prevented. Furthermore, the shaft-shaped member instantly comes into close contact with the frame 110, and users' fear while moving a large amount instantly (when dropped, etc.) can be reduced.

### (Modification examples of the first embodiment)

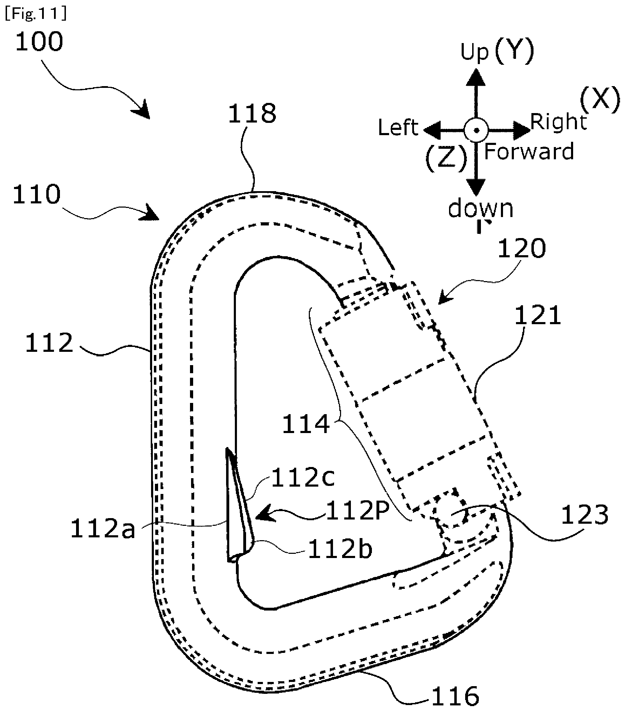

In the sections that follow, modified examples of the first embodiment are described with reference to FIG. 11 to FIG. 15B. In FIG. 11 to FIG 15B, these are represented by solid lines and the others are represented by broken lines so that the outer shape of the frame 110 of the connector for safety device connection 100 and the protrusion 112P can be easily distinguished.

### <The protrusion 112P>

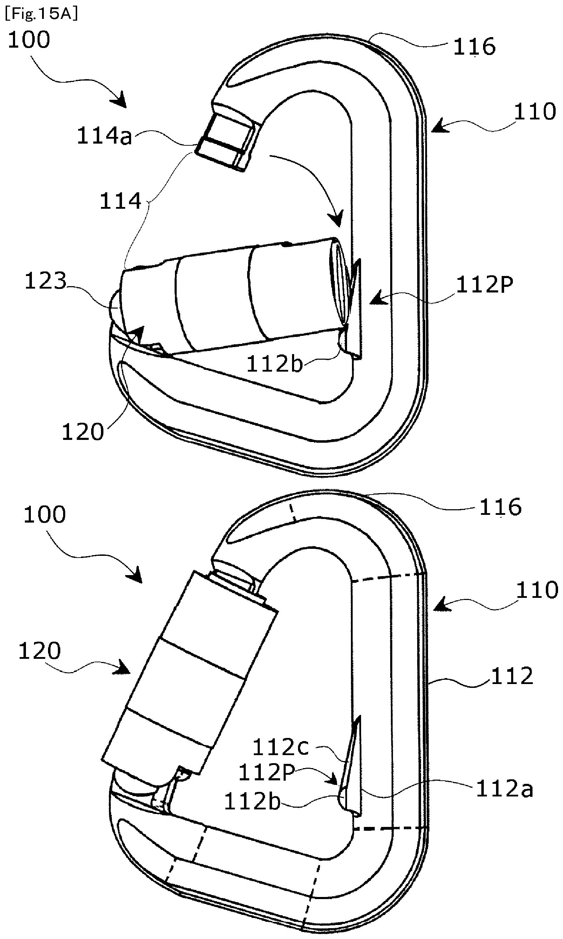

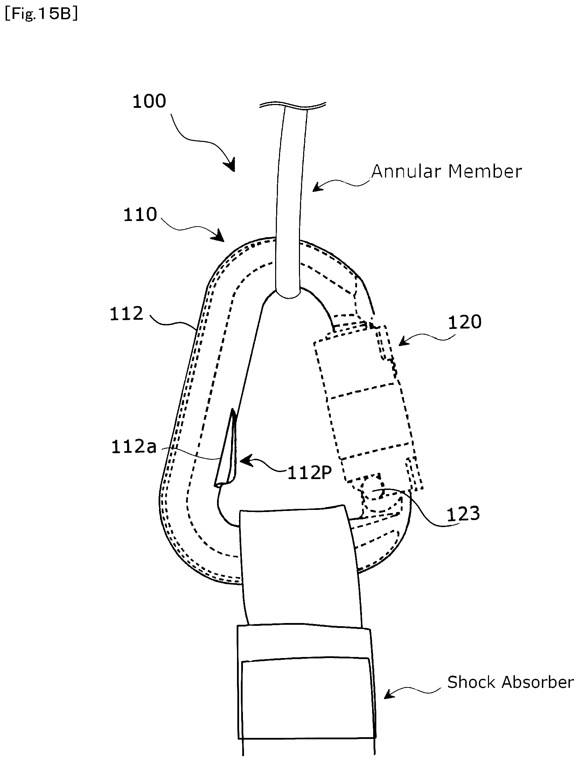

In this modification, as shown such as in FIG. 11 to FIG. 15B, a protrusion 112P is provided inside the spine 112, which is slightly below the center of the frame 110 in the top to bottom direction. In other words, the position is the gate 120 side on the peripheral surface of the spine 112, which is the position corresponding to the rotation axis P side or the gate support portion 123 side of the gate 120 in the top to bottom direction.

The protrusion 112P is provided integrally with the frame 110. Further, the protrusion 112P has the base end portion 112a, the protruding end portion 112b, and the upper inclined surface 112c. The upper inclined surface 112c is a portion inclined upward from the tip portion 112b toward the peripheral surface of the spine 112. The base end portion 112a corresponds to a boundary portion with the spine 112.

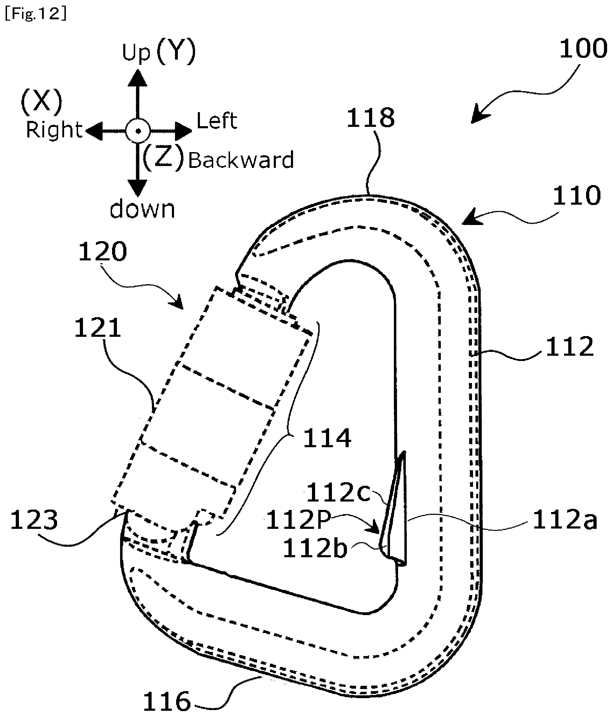

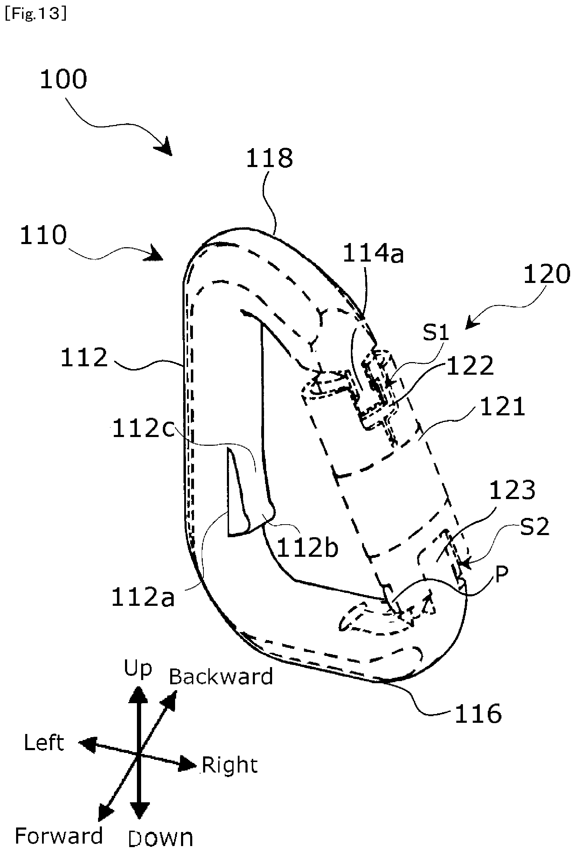

Further, as shown such as in FIG. 13, the protruding end portion 112b is an end surface protruding from the protrusion 112P, and it is formed in a curved surface shape, that is, so as to have an R. Further, as shown such as in FIG. 11 and FIG 12, the slope of the upper inclined surface 112c with respect to the base end portion 112a is gentle. On the other hand, the gradient from the tip portion 112b to the lower side (first portion 116 side) is formed relatively steeply. Because of the protrusion 112P, for example, a flat rope (belt-shaped member) or the like can be fastened to the first portion 116 side.

In order to indent this effect, it is desirable to secure the height and slope of the inclined surface on the lower side from the tip portion 112b. Further, by suppressing the gradient of the upper inclined surface 112c as much as possible, the belt-shaped member can be easily guided to the first portion 116 side. As a configuration for this purpose, the lowgradient upper inclined surface 112c needs to secure a predetermined length. This length is, for example, 2 to 7 times as long as the lower slope. This is because the height of the tip portion 112b cannot be secured if the gradient is low and the length is short.

In addition, the article to be retained on the side of the first portion 116 can have various forms. For example, it may be a thick belt-shaped member or a belt-shaped member having a normal thickness. In order to accommodate these articles in a wide range, it is desirable that the base end position of the inclined surface on the lower side of the protrusion 112P should be located somewhere from the lower end of the spine 112 to a height of 8 mm or less.

According to the connector for safety device connection 100 of the present embodiment, the first portion 116 side of the spine 112 has the protrusion 112P. Moreover, the gradient on the first portion 116 side of the protrusion 112P is relatively steep. Therefore, even if the connector for safety device connection 100 tries to rotate and the belt-shaped member tries to move to the spine 112, it comes into contact with the lower surface of the protrusion 112P, which as a result prevents the movement.

Further, because the second portion 118 side is formed in an arc shape, the metal ring of the full harness is also fastened inside the second portion 118. Therefore, even if the metal ring on the full harness side and the belt-shaped member on the lanyard side pull the connector for safety device connection in opposite directions, a situation in which the connector 100 is easily broken can be prevented. Although the following embodiment is described on the premise that the protrusion 112P is provided, a structure without the spine 112 is possible.

Further, in order to reduce the size of the connecting ring 100, the height of the protrusion 112P is determined according to the ratio of the width of the flat rope to the width of the first portion 116.

### [The second embodiment]

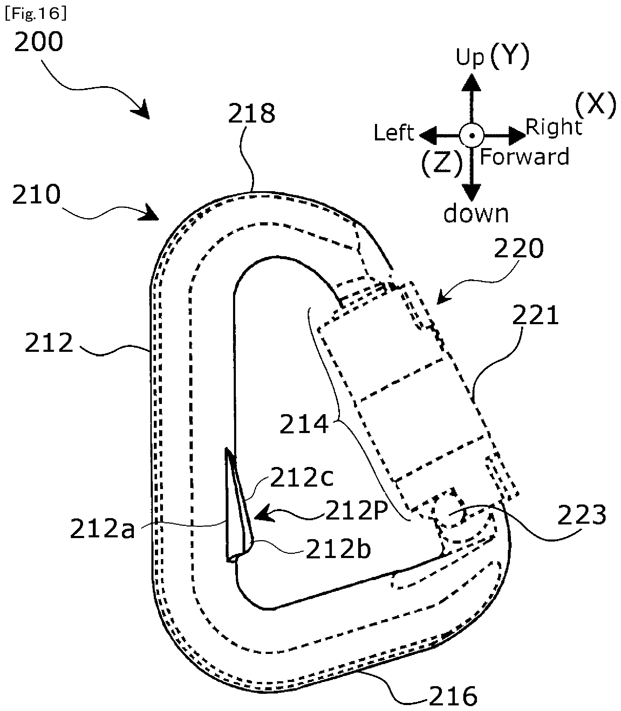

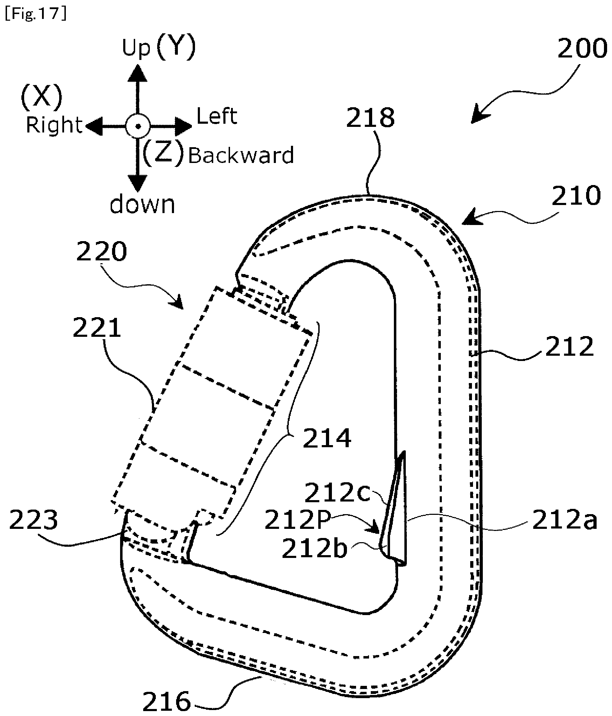

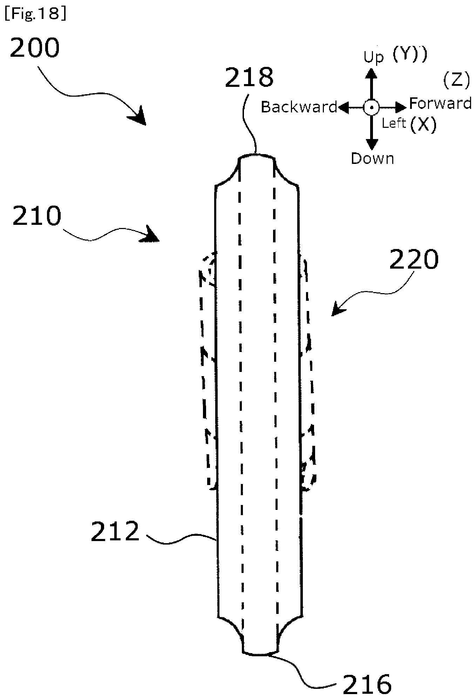

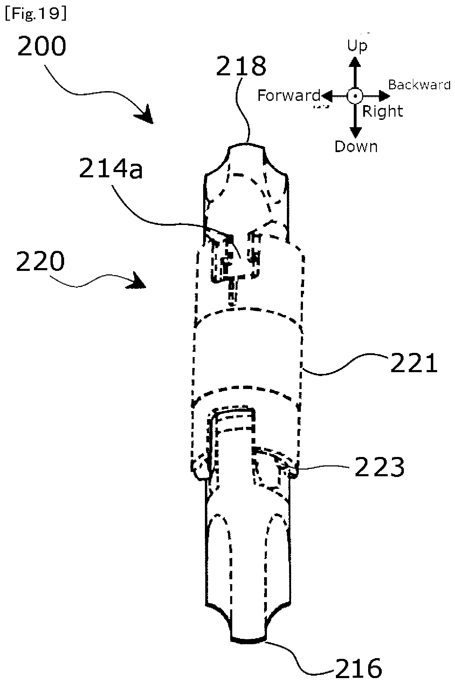

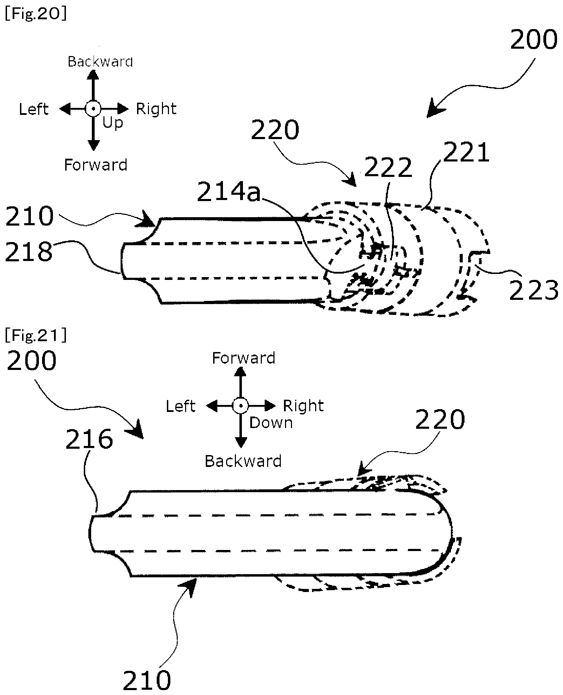

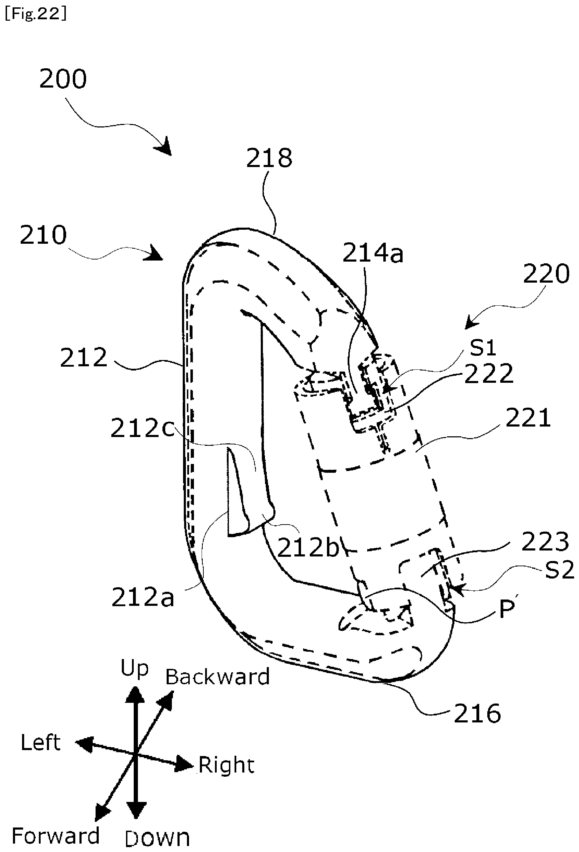

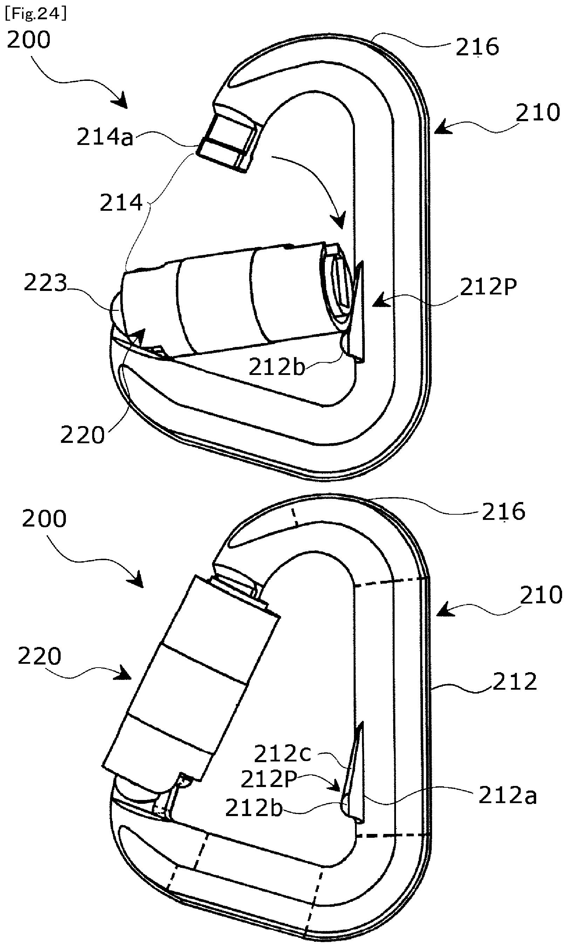

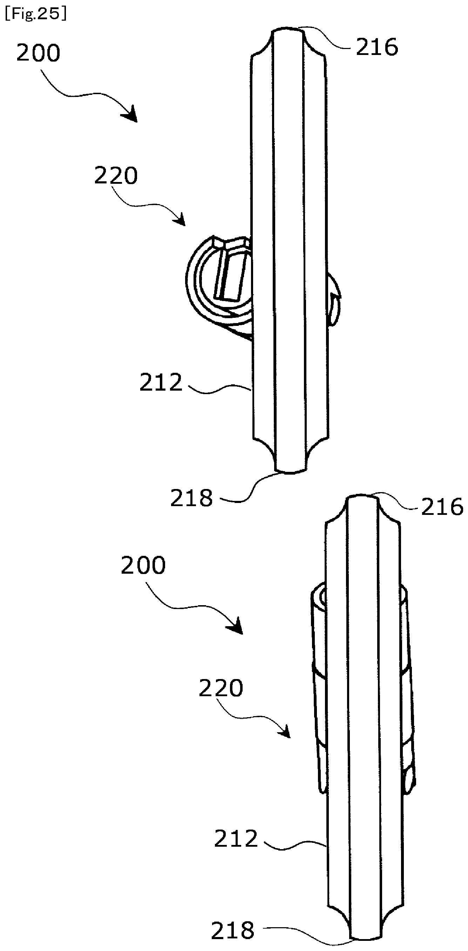

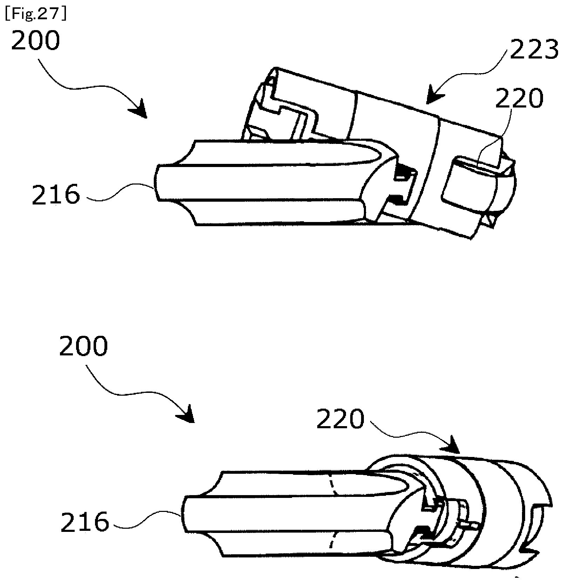

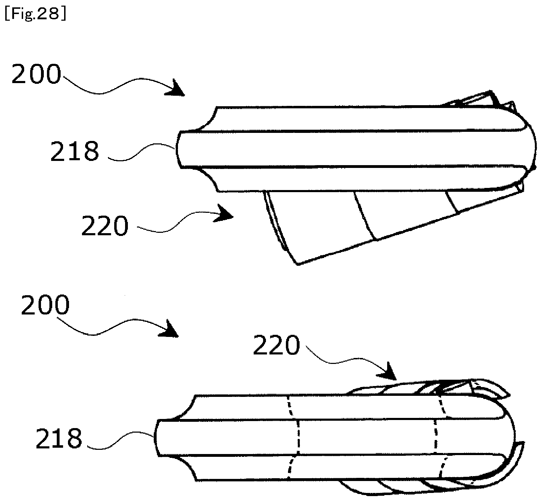

Next, the connector for safety device connection 200 according to the second embodiment is described with reference to FIG. 16 to FIG. 29. Accordingly, the parts common to the first embodiment will be omitted. The connector for safety device connection 200 in the second embodiment includes the frame 210 and the gate 220 as in the first embodiment. Similar to the first embodiment, the frame 210 is provided with the first portion 216 at the lower portion and the second portion 218 at the upper portion of the spine 212. The gate support portion 223 is provided at the tip of the first portion 216, and the nose 214a is provided at the tip of the second portion 218. These shapes and configurations are the same as those in the first embodiment.

### <The gate support 223, the nose 214a>

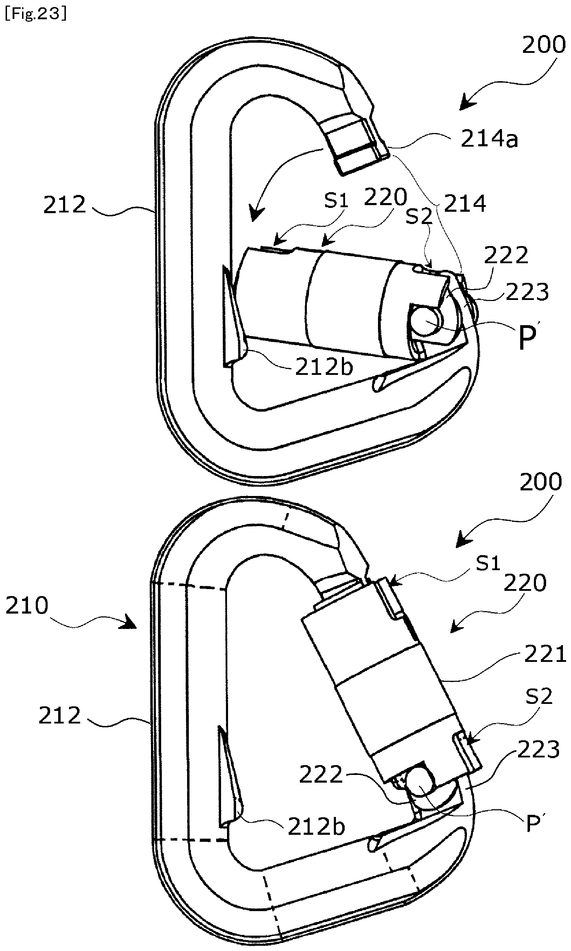

As shown in FIG. 23 to FIG. 29, the gate support portion 223 is inclined with respect to the spine 212 by approximately the inclination angle in order to incline the rotation direction of the gate 220 described later. Similarly, the nose 214a is also configured to be inclined in the same manner.

### <The gate 220>

The gate 220 includes the gate body 222 rotatably supported by the rotation shaft P of the gate support portion 223, and the lock cover 221 provided around the gate body 222. The twist lock mechanism and the like for the illustrated gate 220 are the same as those in the first embodiment. However, the rotation shaft P is described below as it is different.

### <<The rotating shaft P'>

The rotation shaft P, according to the first embodiment, is configured to have a second direction connecting the nose 114a (see for example, FIG. 7 to FIG. 8) and the tip of the gate support portion 123 as well as to be orthogonal to the first direction connecting one end and the other end of the spine 112. The gate 120 pivotally supported by the gate 120 rotates in parallel with the first direction and the second direction, assuming that they are viewed in the same plane. However, the gate 220 according to the second embodiment tilts and rotates with respect to the assumed plane. Therefore, in contrast to the rotation shaft P according to the first embodiment, the rotation shaft P' according to the second embodiment is provided so as to rotate the gate 220 at a predetermined inclination angle. The inclination angle is detailed in the following description of the rotation direction of the gate 220.

### <<Rotation direction>>

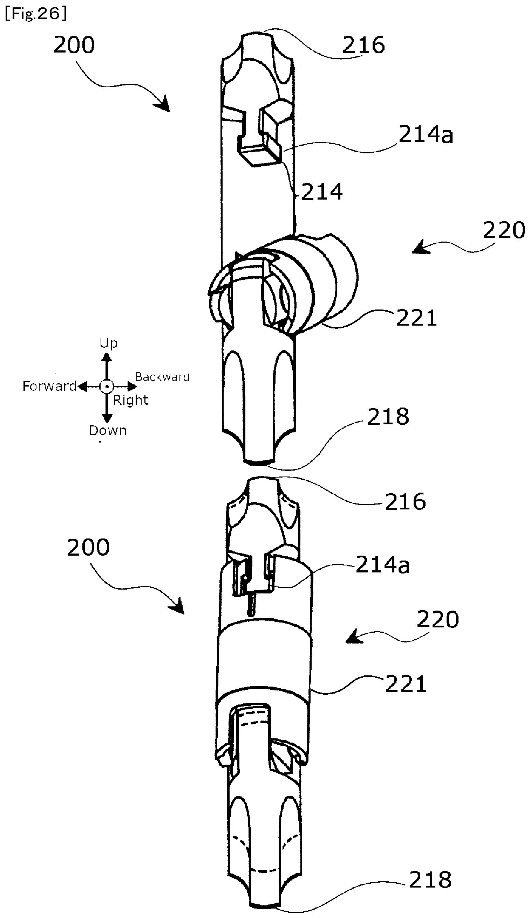

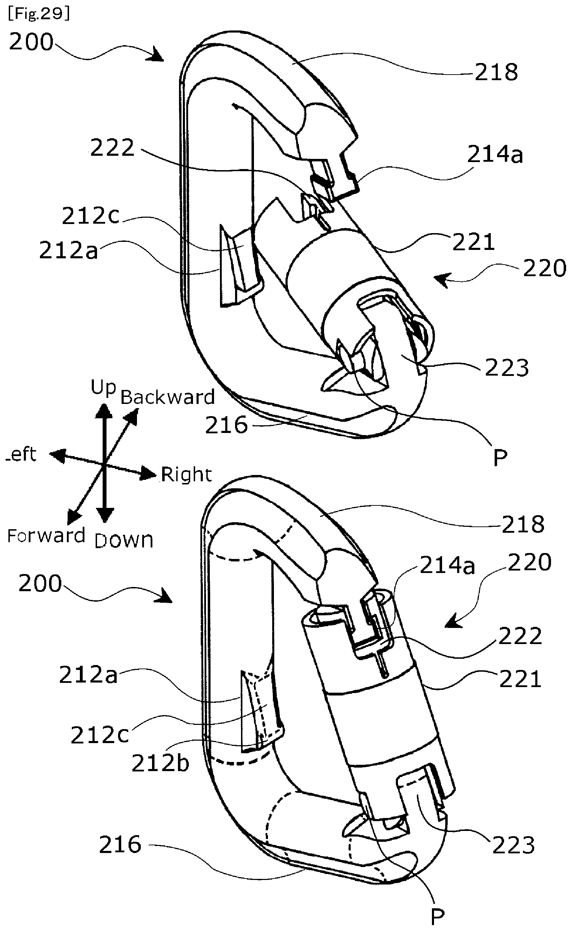

As described above, the gate 220 (for example, FIG. 16 to FIG. 22) according to the second embodiment rotates at an angle inclined by a predetermined angle with respect to the assumed plane. This predetermined angle is described with reference to FIG. 26 and FIG. 29. As shown in the above figure in FIG. 26 and FIG. 29, the angle at which the rotation direction tilts with respect to the above plane is the angle at which the front part of the tip of the gate 220 (the left side in the viewpoint of FIG. 26) is close to the rear side of the spine 212. In these figures, the left front portion of the gate 220 tip edge rotated to the position farthest from the nose 214a is close to the rear of the protrusion 212P of the spine 212. This is the above-mentioned predetermined angle.

Conventionally, it was necessary to secure the width of the inner area of the frame by the length from the base end to the tip end of the gate. This made the second portion (118, 218) spread in the left-right direction, making it difficult to prevent the shaft member (D ring or the like) located there from rattling. In addition, this width made the connector for safety device connection large and heavy. In contrast, in the present embodiment, by inclining the rotation direction and letting the tip of the gate 220 escape to the outside of the frame 210, the area inside the frame for the length from the base end to the tip end of the gate no longer needed to be secured. This prevented rattling and reduced the size of the connector for safety device connection, and as a result, weight reduction was achieved.

Further, according to the present embodiment, not only is the tip of the gate 220 released to the outside of the frame 210 but also it rotates in a direction so to approach the rear of the protrusion 212P under the condition where the gate 220 is most tilted toward the spine 212. This is because it is desirable that the gate 220 rotate toward the spine 212 while being inclined. For example, users often rotate the gate 220 by unlocking a twist lock. Assuming this, the method of pressing the article against the gate 220 inward of the frame 210 and rotating it can be one of the easiest.

The tilt angle may be any angle in the range of -90° to -15 ° or + 15 ° to + 90 °. Further, from the viewpoint of operability of the gate 220, the inclination angle should preferably be in the range of -60° to -15 ° or + 15 ° to + 60 °. In other words, if the left front part or the right rear part at the tip edge of the gate 220 comes to the center side, it will hit the spine 212, forcing the second part 218 to be expanded. As a result, it becomes large and heavy as a whole. Further, if it is tilted beyond -60 ° or 60 °, it becomes impossible to open the gate by grasping it with one hand, which lowers the operability. Therefore, the above angle is preferable.

### [Operations and effects]

The operations and effects of the above-mentioned connector for safety device connection 2

### 200 according to the second embodiment is explained below.

According to the embodiment of the connector for safety device connection 200, the protrusion 212P is provided on the inner surface of the spine 212 on the rotation axis P side (lower side) of the gate 220 in its axial direction. Further, the first portion 216 connecting the spine 212 and the gate support portion 223 is formed to be linear or have a small curvature. The surface of the protrusion 212P on the first portion 216 side has a large inclination angle and is configured to hold an article to be hung on the first portion 216 side. Further, the second portion 218 is formed to have an arc shape or a curvature larger than that of the first portion 216.

This configuration can prevent the article to be hung on the connector for safety device connection 200 from moving to a position where the connector for safety device connection 200 is easily damaged due to usage states of the connector for safety device connection.

Further, the present embodiment allows the tip of the gate 220 to escape to the outside of the frame 210 and configures the left front portion at the tip edge of the gate 220 not too far from the spine 212. This configuration makes it easier for users to hang an article as they can rotate the article by pressing it against gate 220 when unlocking the twist lock and rotating the gate 220. This configuration can also ensure durability. Further, it is no longer necessary to secure the width of the inner region of the frame by the length from the base end to the tip of the gate by inclining the rotation direction and letting the tip of the gate 220 escape to the outside of the frame 210. This prevents rattling and reduces the size of the connector for safety device connection, and as a result, weight reduction can be achieved.

### [The third embodiment]

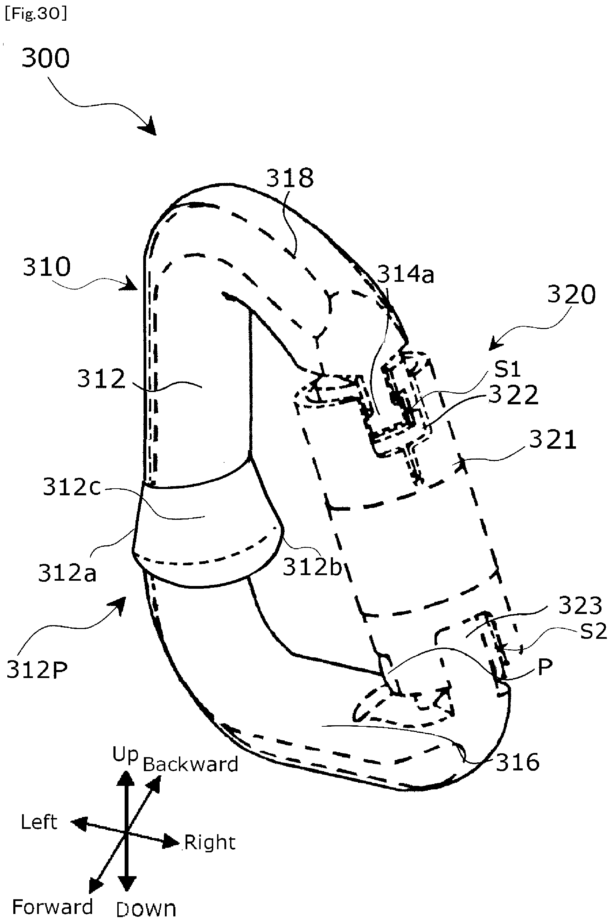

Next, the connector for safety device connection 300 according to the third embodiment is described with reference to FIG. 30. Accordingly, the parts common to the second embodiment will be omitted. The connector for safety device connection 300 in the third embodiment includes the frame 310 and the gate 320 as in the second embodiment. Similar to the first embodiment, the frame 310 is provided with the first portion 316 at the lower portion and the second portion 318 at the upper portion of the spine 312. The gate support portion 323 is provided at the tip of the first portion 316, and the nose 314a is provided at the tip of the second portion 318. These shapes and configurations are the same as those in the second embodiment.

### <Protrusion 312P>

In the third embodiment, the protrusion 312P is provided so as to cover the inner surface of the spine 312 from the front to the rear via the right side (inward direction of the frame 310) of the spine 312.

The base end portion 312a and the protruding end portion 312b of the protrusion 312P are curved, and the inclination angle of the upper inclined surface 312c is the same as the description in the first embodiment.

In the third embodiment, the spine 312 is provided so as to cover the inner surface of the spine 312 from the front to the rear via the right side (inward direction of the frame 310). However, it is not limited to such a configuration. For example, the protrusion 312P may be provided in a truncated cone shape or a truncated pyramid-shaped shape so as to make one round so as to cover around the axis of the spine 312.

### (Operations and effects)

Even with the connector for safety device connection according to the third embodiment described above can prevent the article to be hung on the connector for safety device connection 300 from moving to a position where the connector for safety device connection 300 is easily damaged due to usage states of the connector for safety device connection.

Further, in the combination of the present embodiment and the second embodiment, as in the second embodiment, when the user rotates the gate 320 with the twist lock mechanism released, the article is pressed against the gate 320 to rotate. It can be made to hang easily. In addition, it is possible to prevent the durability from being affected by such a configuration.

### [Fourth Embodiment]

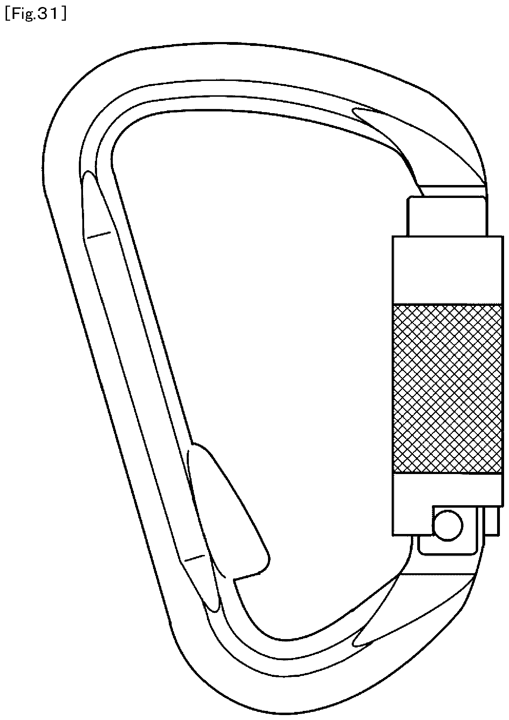

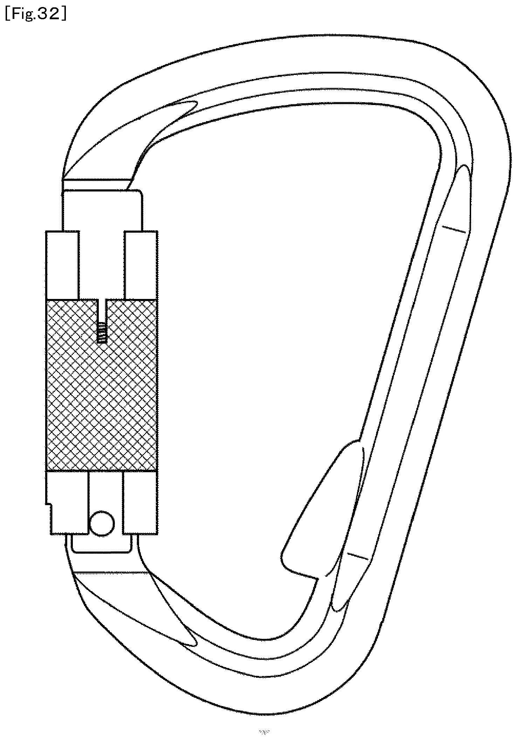

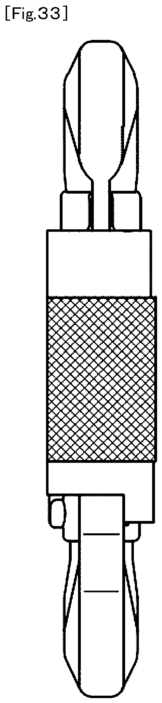

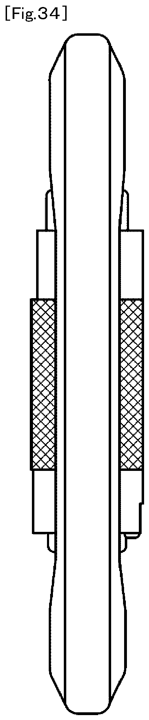

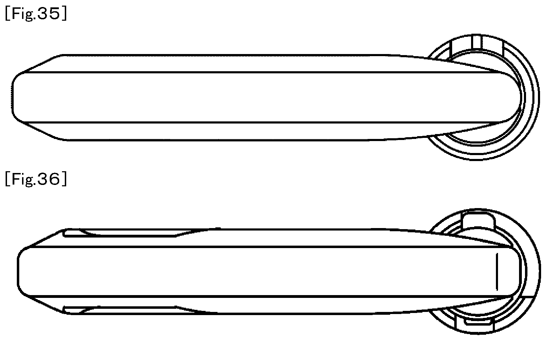

Next, the connector for safety device connection 300 according to the fourth embodiment will be described with reference to FIGS. 31 to 36.

Since the only parts that differ in present embodiment from the first to third embodiments are the first and second parts of the frame, the description of the other parts is omitted.

The connector for safety device connection in the fourth embodiment includes a frame and a gate as in each of the above embodiments.

The structure of the spine of the frame is the same as in each of the above embodiments, but the shape of the first portion connected to the lower part of the spine 312 and the shape of the second part connected to the upper part are different.

It should be noted that the gate support portion is provided at the tip of the first portion and the nose is provided at the tip of the second portion, which is the same as in each of the above embodiments.

As shown in FIGS. 31 to 36, in the fourth embodiment, the shape of the first portion and the shape of the second portion in each of the above embodiments are interchanged. That is, the first portion is formed in an arc shape, and the second portion is formed in a linear shape or a linear curved shape having a small curvature.

Also in the fourth embodiment, the metal structure is made dense by compressing each end side of the frame toward the center side as a whole frame.

This enhances resistance to tensile load, impact resistance, and fatigue strength.

### (Operations and effects)

Even with the connector for safety device connection according to the fourth embodiment described above, it is possible to prevent that the article to be hung on the connector for safety device connection moves to a position where the connector for safety device connection is easily damaged depending on the usage state and the like.

Further, unlike the first to third embodiments, the present embodiment assumes that an article having a diameter of 16 mm or 18 mm, such as a rescue rope or a sail rope, is hung on the second portion side. It is necessary to correspond to the situation where the width of the second portion must be secured as compared with the D ring having a diameter of up to 13 mm with a large one such as the third embodiment.

Further, in the case of rescue, it is necessary to attach and detach the rescue rope extremely quickly, which requires a margin in width.

The connector for safety device connection according to the first to fourth embodiments and their modifications, it is possible to prevent that moves to a position where the article to be applied to the connector for safety device connection is easily damaged depending on the usage state and the like.

As a result, when connecting between the safety belt used for climbing, high-altitude work, or rescue and the lifeline, etc., it is possible to prevent accidents due to damage to the connector for safety device connection, and to give the user feels at ease.

Even when used for containers, work tools, etc., it is possible to prevent accidents caused by dropping these containers, tools, etc., and economic loss due to their damage.

In addition, it is possible to obtain the effect of each embodiment by appropriately combining each of the above embodiments and modifications, and to obtain a synergistic effect when they are combined.

It includes the followings:
a frame having a hook portion curved so as to be folded back from one end of the linear portion, and a hooking region from the curved tip to the inner region of the curved portion; a gate supported on the other end side of the linear portion of the frame, and rotated between a direction of contact with the tip of the hook and a direction away from the tip; a rotation axis of the gate, a hole drilled in the substantially same direction as an axial direction of the rotation axis; and a locking portion that is reciprocally reciprocating along the hole, is biased toward one side of the frame, and has a contact portion that projects from the hole on that one side.

### [Fifth Embodiment]

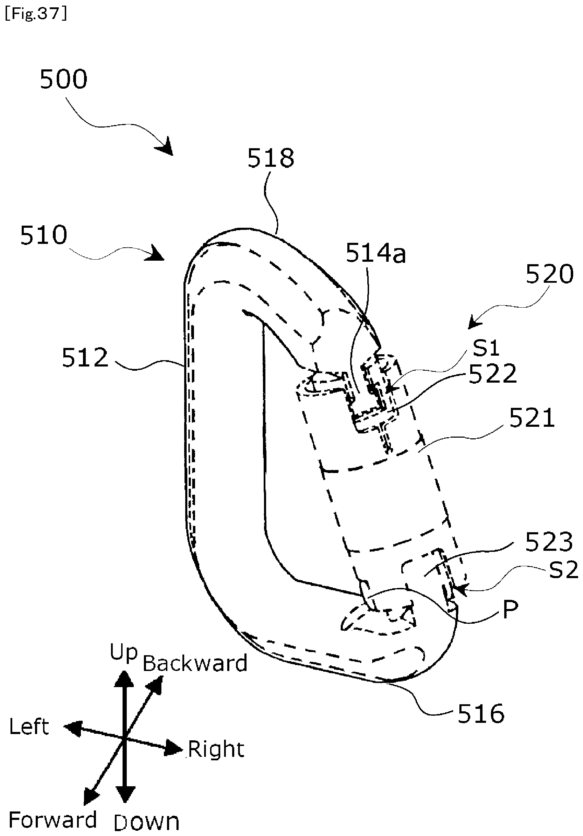

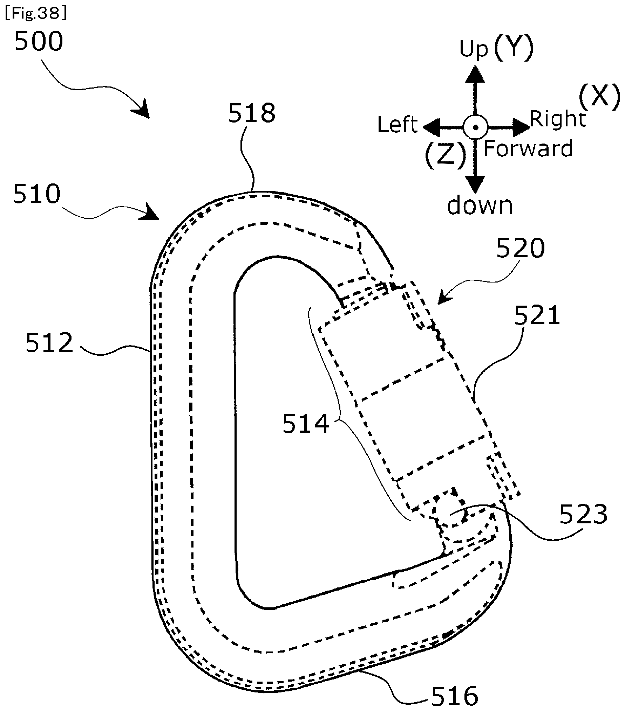

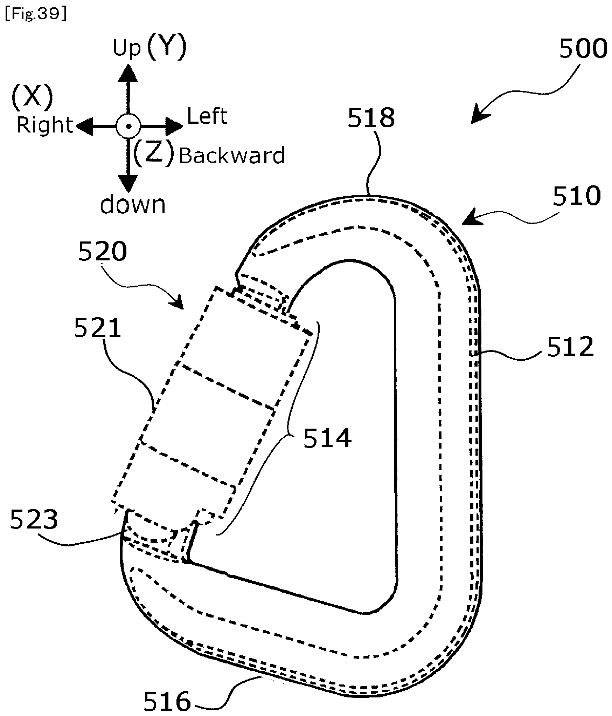

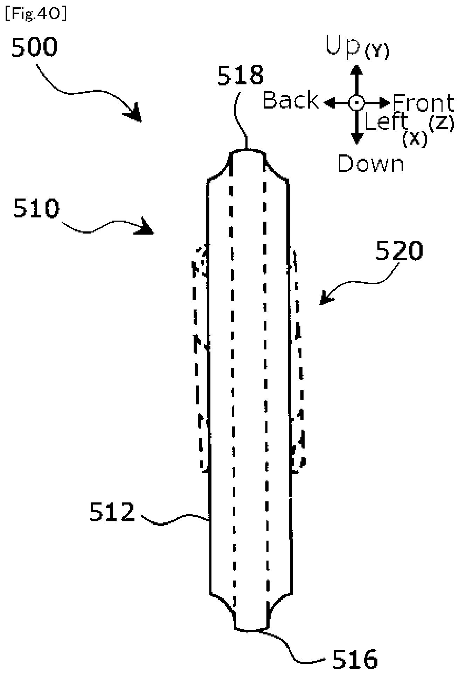

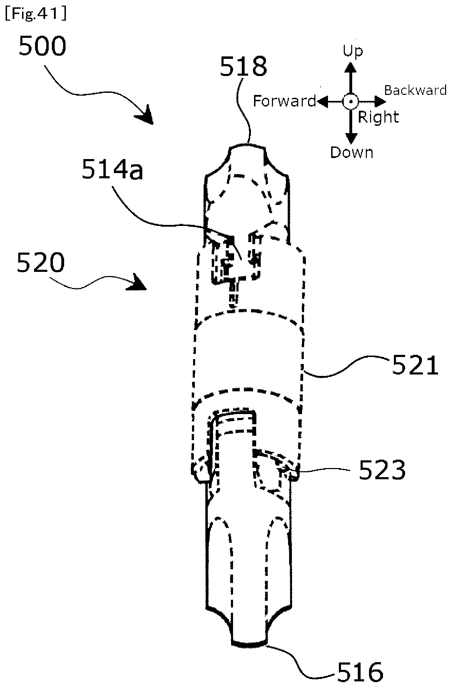

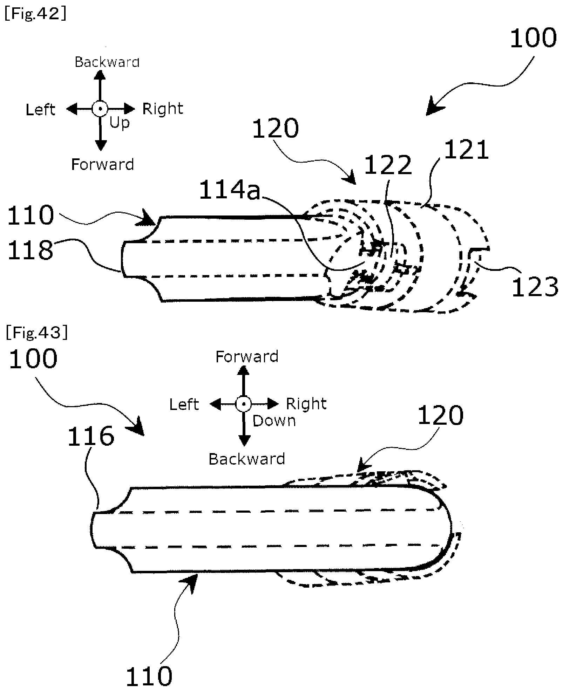

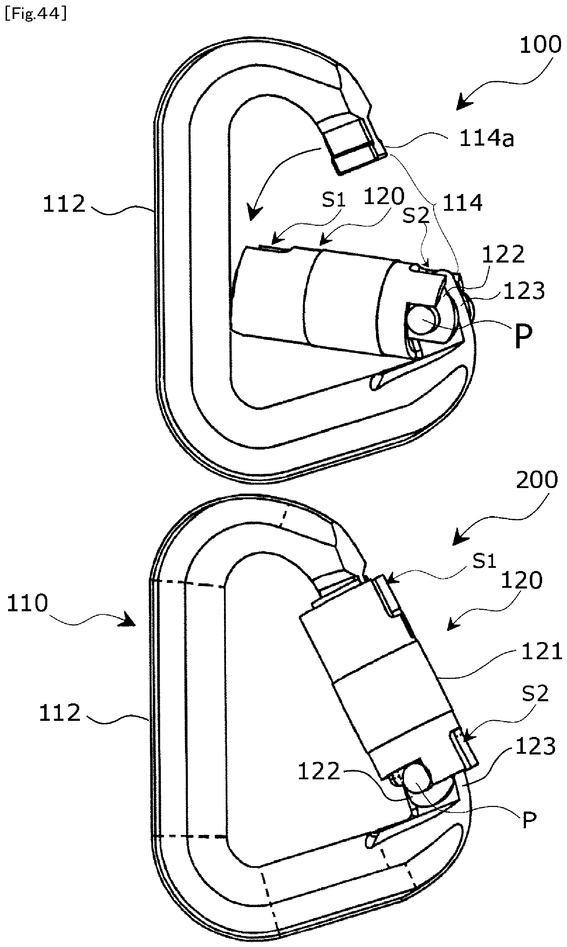

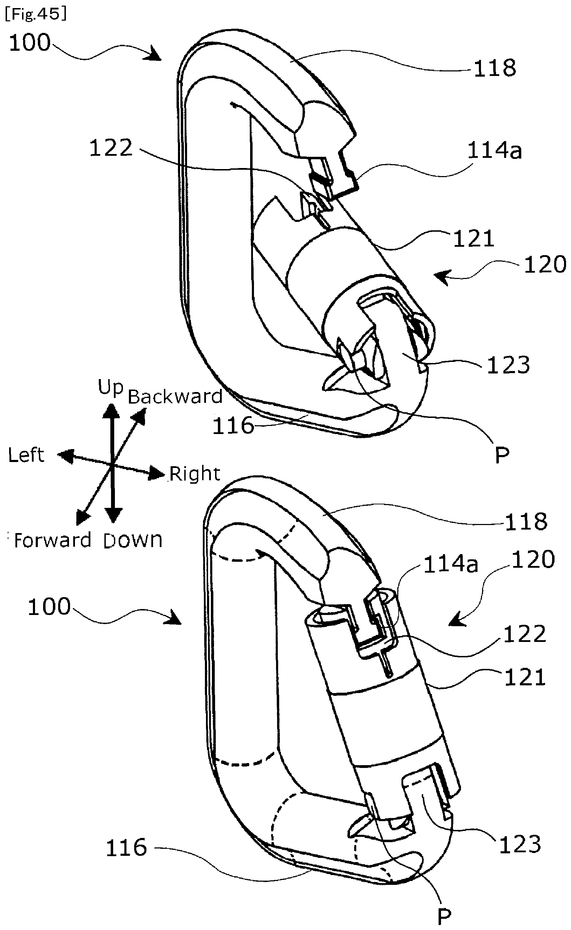

Next, the connector for safety device connection 500 according to the fifth embodiment will be described with reference to FIGS. 37 to 45.

The parts common to the second embodiment will be omitted as appropriate. The connector for safety device connection 500 in the fifth embodiment includes the frame 510 and the gate 520 as in the second embodiment. Similar to the second embodiment, the frame 510 is provided with a first portion 516 at the lower portion and a second portion 518 at the upper portion of the spine 512. Further, a gate support portion 523 is provided at the tip of the first portion 516, and a nose 514a is provided at the tip of the second portion 518. These shapes and configurations are the same as those in the second embodiment.

### <Spine 512>

In the fifth embodiment, unlike the second embodiment, the protrusion 212P is not provided.

### (Operations and effects)

Even with the connector for safety device connection according to the fifth embodiment described above, it is possible to prevent depending on the usage state and the like, the article to be hung on the connector for safety device connection 500 may move a position where the connector for safety device connection 500 is easily damaged.

Further, as in the second embodiment, after the lock mechanism released, the user can press the article against the gate 520 and rotate it to make it easier to hang the article on the gate.

In addition, this configuration also prevents durability from being affected.

Further, by inclining the rotation direction and letting the tip of the gate 520 escape to the outside of the frame 510, it is no longer necessary to secure the width of the inner region of the frame by the length from the base end to the tip of the gate.

As a result, it is possible to prevent rattling and reduce the size of the connector for safety device connection, and as a result, it is possible to reduce the weight.

### (Appendix)

### [Claim A]

A connector for safety device connection according to the present invention includes the followings:
a frame that is formed in an open curve to make the ends of the frame face each other and that has an opening for inserting the connecting portion of another connector for safety device connection from between the one end and the other end;
a gate that is supported by one end of the frame, closes the opening when it is in contact with the other end, and opens the opening when the contact with the other end is released;
the frame has a spine on the opposite side of the opening, a first portion of each frame portion continuous with each end portion of the spine that is continuous with an end of a gate support portion side and
a second portion connecting the opposite side to the first portion side of the spine to a nose, which is the portion that the gate tip portion contacts,
when the gate rotates and is farthest from one end of the frame, the extension direction of the gate be inclined by 10 degrees or more to a plane including a first direction from one end to the other end of the spine and a second direction connecting the one end and the other end.

### [Claim B]

The connector for safety device connection of claim A, wherein the first portion is formed to have a linear or a small curvature so that strip-shaped body can be hung,
and the second portion of each frame portion is located on the opposite side of the first portion, and formed with a large curvature so as to suppress the movement of the annular member made of the shaft member.

### [Claim C]

The connector for safety device connection of claim A or claim B, wherein a protrusion part that partially narrows the area between the opening side and the spine side opposite to the opening by, at least, protruding inside the frame,
the protrusion part is provided on the lower side of the spine when the one end side of the frame is downward and the other end side of the frame is upward so as to be formed integrally with the frame,
the gate is configured in a way that when the gate is rotatably supported at one end of the frame and rotated around one end from the closed state, the contact with the other end is released and the open state is established.

### . [Claim D]

The connector for safety device connection of any one of claims A to C, wherein the protrusion is provided on the spine.

### [Claim E]

The connector for safety device connection of any one of claims A to D, wherein the protrusion part is configured so as to protrude not only inside the frame but also in the side surface direction.

### [Claim F]

The connector for safety device connection of any one of claims A to E, wherein the inclination angle of the gate is any angle in the range of -90° to -15 ° or 15 ° + 90 °.

### [Claim G]

The connector for safety device connection, wherein a frame that is formed in an open curve so that the ends face each other and has an opening that allows a connecting portion of a safety device to be inserted between the ends,
a gate that is provided to close the opening, supported at one end of the frame, closes the opening when in contact with the other end, and opens the opening when the contact with the other end is released,
including a protrusion part that partially narrows the area between the opening side and the spine side opposite to the opening by, at least, protruding inside the frame. The protrusion part is provided on the lower side of the spine when the one end side of the frame is downward and the other end side of the frame is upward so as to be formed integrally with the frame.

Although embodiments of the present invention have been described, the above embodiments are presented as examples and are not intended to limit the scope of the invention.

These novel embodiments can be implemented in various other embodiments, and various omissions, replacements, and changes can be made without departing from the gist of the invention.

These embodiments and modifications thereof are included in the scope and gist of the invention, and are also included in the scope of the invention described in the claims and the equivalent scope thereof.

- 100, 200, 300: Connector for safety device connection
- 110,210,310: Frame
- 112,212,410: Spine
- 112a, 212a, 312a: Base end
- 112b, 212b, 312b: Tip end
- 112c, 212c, 312c: Upper inclined surface
- 114,214,314: Openings
- 114a, 214a, 314a: Nose
- 116,216,316: First opening
- 118, 218, 318: Second opening
- 120, 220, 320: Gate
- 121, 221, 321: Lock cover
- 122, 222, 322: Gate body
- 123, 223, 323: Gate support
- S1: Tip side slit
- S2: Base end side slit
- P, P': Rotating shaft

## Claims

1. A connector for safety device connection comprising:
a frame that is formed in an open curve to make the ends of the frame face each other and that has an opening for inserting the connecting portion of another connector for safety device connection from between the one end and the other end; and
a gate that is supported by one end of the frame, closes the opening when it is in contact with the other end, and opens the opening when the contact with the other end is released;
wherein, the frame has a spine on the opposite side of the opening,
of the parts of the frame that is continuous with the spine, the first portion that is continuous with the end of the frame on the gate support side is formed with a small curvature so that a straight line or a webbing sling can be hung,
Of the parts of the frame, the second portion, located on the opposite side of the first portion and continuous with the opening-side end of the spine, is formed with a large curvature so as to suppress the movement of an annular member made of a shaft member.

2. The connector for safety device connection of claim 1, wherein a protrusion part that partially narrows the area between the opening side and the spine side opposite to the opening by, at least, protruding inside the frame,
the protrusion part is provided on the lower side or near one end of the spine when the one end side of the frame is downward and the other end side of the frame is upward so as to be formed integrally with the frame,
the gate the contact with the other end is released and the open state is established when the gate is rotatably supported at one end of the frame and rotated around one end from the closed state.

3. The connector for safety device connection of claim 1 or 2, wherein the protrusion part is provided on the spine.

4. The connector for safety device connection of any one of claim 1 to 3, wherein the protrusion part is configured so as to protrude not only inside the frame but also in the side surface direction.

5. The connector for safety device connection of any one of claim 1 to 4, wherein the protrusion part, among the inclined surface connecting the inwardly protruding end and the base end of the protruding portion, the downward tilt angle is 50 degrees or more.

6. The connector for safety device connection of any one of claim 1 to 5, wherein the protrusion part, among the inclined surface connecting the inwardly protruding end and the base end of the protruding portion, the upward tilt angle is 40 degrees or less.

7. The connector for safety device connection of claims 2, wherein when the gate rotates and is farthest from one end of the frame, the extension direction of the gate is inclined by 10 degrees or more to a plane including a first direction from one end to the other end of the spine and a second direction connecting the one end and the other end.

8. The connector for safety device connection of claims 1 or 2, wherein the frame is formed so that the lower side is longer than the upper side in the first direction.

9. A connector for safety device connection comprising:
a frame that is formed in an open curve so that the ends face each other and has an opening that allows a connecting portion of a safety device to be inserted between the ends;
a gate that is provided to close the opening, supported at one end of the frame, closes the opening when in contact with the other end, and opens the opening when the contact with the other end is released.
a protrusion part that partially narrows the area between the opening side and the spine side opposite to the opening by, at least, protruding inside the frame
wherein the protrusion part is provided on the lower side of the spine or near one end of the spine when the one end side of the frame is downward and the other end side of the frame is upward so as to be formed integrally with the frame.
